# EUROPEAN PATENT APPLICATION

(11) **EP 4 651 392 A1**
(43) Date of publication of application: **19.11.2025**
(21) Application number: 24741664.7
(22) Date of filing: 09.01.2024
(51) Int. Cl.: H04B 7/0408, H04B 7/0417, H04B 7/06, H04B 17/309, H04W 24/10, G06N 20/00

(54) **BEAM MANAGEMENT METHOD AND APPARATUS USING ARTIFICIAL INTELLIGENCE AND MACHINE LEARNING**

(30) Priority: 10.01.2023 KR 20230003748; 29.12.2023 KR 20230196792
(71) Applicant: KT Corporation, Seongnam-si, Gyeonggi-do 13606 (KR)
(72) Inventor: LEE, Eun Jong, Seongnam-si Gyeonggi-do 13606 (KR)
(74) Representative: Santarelli
(86) International application number: PCT/KR2024/000384
(87) International publication number: WO 2024/151043

(57) **Abstract**

Provided are a method and apparatus for providing a beam management technology using artificial intelligence and machine learning in a wireless communication system. The method may include receiving, from a base station, a message including one or more pieces of resource information for a reference signal and an indicator indicating a model process linked to the one or more pieces of resource information; deriving a measurement result by performing a measurement operation on the reference signal on the basis of the message and performing the model process linked to the indicator by using the measurement result; and transmitting, to the base station, a report message including at least one of the measurement result and model process result information.

## Description

### Technical Field

The disclosure provides a beam management technology using artificial intelligence and machine learning in a wireless communication system.

### Background Art

3GPP has recently authorized a study titled "Study on New Radio Access Technology," which investigates next-generation radio access (e.g., 5G radio access technology). Based thereupon, RAN WG1 is conducting design work on various aspects of the new radio (NR) technology, such as frame structure, channel coding, modulation, and waveform and multiple access scheme. NR requires a design for meeting various QoS requirements required for each of usage scenarios more broken down and specified and enhanced data rate as compared with LTE.

As representative usage scenarios of NR, enhanced mobile broadband (eMBB), massive machine type communication (mMTC), and ultra-reliable and low latency communications (URLLC) have been defined and, to meet the requirements for each usage scenario, a flexible frame structure than that of LTE needs to be designed.

Each usage scenario has different requirements for data rates, latency, reliability, and coverage. Thus, a need arises for a scheme to efficiently multiplex radio resource units based on different numerologies (e.g., subcarrier spacing, subframe, transmission time interval (TTI), etc.) as a method to effectively meet the requirements for each usage scenario via the frequency band constituting any NR system.

As part of this trend, artificial intelligence (Al) and machine learning (ML) technologies are being introduced into the wireless communications field, which requires a specific design to enable the application and management of AI/ML models.

### Detailed Description of the Invention

### Technical Problem

The disclosure provides a beam management method and device using artificial intelligence and machine learning in a wireless communication system.

### Technical Solution

In an aspect, the disclosure may provide a method for a user equipment (UE) to perform a beam management operation. The method may include a receiving step of receiving, from a base station, a message including at least one piece of resource information for a reference signal and an indicator indicating a model process associated with the at least one piece of resource information, a control step of performing a measurement operation for the reference signal based on the message to derive a measurement result, and performing the model process associated with the indicator using the measurement result, and a transmitting step of transmitting, to the base station, a report message including at least one of the measurement result and result information of the model process.

In another aspect, the disclosure may provide a method for a base station to perform a beam management operation. The method may include a transmitting step of transmitting, to a UE, a message including at least one piece of resource information for a reference signal and an indicator indicating a model process associated with the at least one piece of resource information, and a receiving step of receiving, from the UE, a report message including at least one of a measurement result obtained by the UE performing a measurement operation for the reference signal based on the message, and model process result information according to the model process.

In another aspect, the disclosure may provide a UE performing a beam management operation. The UE may incluide a receiver receiving, from a base station, a message including at least one piece of resource information for a reference signal and an indicator indicating a model process associated with the at least one piece of resource information, a controller performing a measurement operation for the reference signal based on the message to derive a measurement result, and performing the model process associated with the indicator using the measurement result, and a transmitter transmitting, to the base station, a report message including at least one of the measurement result and result information of the model process.

In another aspect, the disclosure may provide a base station performing a beam management operation. The base station may include a transmitter transmitting, to a UE, a message including at least one piece of resource information for a reference signal and an indicator indicating a model process associated with the at least one piece of resource information, and a receiver receiving, from the UE, a report message including at least one of a measurement result obtained by the UE performing a measurement operation for the reference signal based on the message, and model process result information according to the model process.

### Advantageous Effects

The disclosure may provide a beam management method and device using artificial intelligence and machine learning in a wireless communication system.

### Brief Description of Drawings

FIG. 1 is a view schematically illustrating an NR wireless communication system in accordance with embodiments of the present disclosure;
FIG. 2 is a view schematically illustrating a frame structure in an NR system in accordance with embodiments of the present disclosure;
FIG. 3 is a view for explaining resource grids supported by a radio access technology in accordance with embodiments of the present disclosure;
FIG. 4 is a view for explaining bandwidth parts supported by a radio access technology in accordance with embodiments of the present disclosure;
FIG. 5 is a view illustrating an example of a synchronization signal block in a radio access technology in accordance with embodiments of the present disclosure;
FIG. 6 is a signal diagram for explaining a random access procedure in a radio access technology in accordance with embodiments of the present disclosure;
FIG. 7 is a view for explaining CORESET;
FIG. 8 is a view illustrating an operation in which two UEs perform initial beam management at two different positions while a base station performs a beam transmission operation;
FIG. 9 is a diagram illustrating an initial access procedure of a UE and a base station;
FIGS. 10 and 11 are diagrams illustrating setting a candidate beam allocated to a UE;
FIG. 12 is a diagram illustrating a procedure for beam management;
FIGS. 13 to 15 are diagrams illustrating a beam reporting method according to a reporting method;
FIG. 16 is a flowchart illustrating a UE operation according to an embodiment;
FIG. 17 is a flowchart for describing operations of a base station according to an embodiment;
FIGS. 18 and 19 are diagrams illustrating an operation of performing beam measurement and beam prediction using AI/ML according to an embodiment;
FIG. 20 is a diagram illustrating a temporal prediction operation using AI/ML according to an embodiment;
FIG. 21 is a diagram illustrating the operation of the UE-side model, UE-side monitoring in BM-Case1 according to an embodiment;
FIG. 22 is a diagram illustrating an example of the operation of the UE-side model, NW-side monitoring in BM-Case1 according to an embodiment;
FIG. 23 is a diagram illustrating another example of the operation of the UE-side model, NW-side monitoring in BM-Case1 according to an embodiment;
FIG. 24 is a diagram illustrating an example of the operation of the UE-side model in BM-Case2 according to an embodiment;
FIG. 25 is a diagram illustrating another example of the operation of the UE-side model in BM-Case2 according to an embodiment;
FIG. 26 is a block diagram illustrating a UE according to an embodiment; and
FIG. 27 is a block diagram illustrating a base station according to an embodiment.

### Mode for Carrying out the Invention

Hereinafter, some embodiments of the present disclosure will be described in detail with reference to the accompanying illustrative drawings. In the drawings, like reference numerals are used to denote like elements throughout the drawings, even if they are shown on different drawings. Further, in the following description of the present disclosure, a detailed description of known functions and configurations incorporated herein will be omitted when it may make the subject matter of the present disclosure rather unclear. When the expression "include", "have", "comprise", or the like as mentioned herein is used, any other part may be added unless the expression "only" is used. When an element is expressed in the singular, the element may cover the plural form unless a special mention is explicitly made of the element.

In addition, terms, such as first, second, A, B, (A), (B) or the like may be used herein when describing components of the present disclosure. Each of these terminologies is not used to define an essence, order or sequence of a corresponding component but used merely to distinguish the corresponding component from other component(s).

In describing the positional relationship between components, if two or more components are described as being "connected", "combined", or "coupled" to each other, it should be understood that two or more components may be directly "connected", "combined", or "coupled" to each other, and that two or more components may be "connected", "combined", or "coupled" to each other with another component "interposed" therebetween. In this case, another component may be included in at least one of the two or more components that are "connected", "combined", or "coupled" to each other.

In the description of a sequence of operating methods or manufacturing methods, for example, the expressions using "after", "subsequent to", "next", "before", and the like may also encompass the case in which operations or processes are performed discontinuously unless "immediately" or "directly" is used in the expression.

Numerical values for components or information corresponding thereto (e.g., levels or the like), which are mentioned herein, may be interpreted as including an error range caused by various factors (e.g., process factors, internal or external impacts, noise, etc.) even if an explicit description thereof is not provided.

The wireless communication system in the present specification refers to a system for providing various communication services, such as a voice service and a data service, using radio resources. The wireless communication system may include a user equipment (UE), a base station, a core network, and the like.

Embodiments disclosed below may be applied to a wireless communication system using various radio access technologies. For example, the embodiments may be applied to various radio access technologies such as code division multiple access (CDMA), frequency division multiple access (FDMA), time division multiple access (TDMA), orthogonal frequency division multiple access (OFDMA), single-carrier frequency division multiple access (SC-FDMA), non-orthogonal multiple access (NOMA), or the like. In addition, the radio access technology may refer to respective generation communication technologies established by various communication organizations, such as 3GPP, 3GPP2, Wi-Fi, Bluetooth, IEEE, ITU, or the like, as well as a specific access technology. For example, CDMA may be implemented as a wireless technology such as universal terrestrial radio access (UTRA) or CDMA2000. TDMA may be implemented as a wireless technology such as global system for mobile communications (GSM)/general packet radio service (GPRS)/enhanced data rates for GSM evolution (EDGE). OFDMA may be implemented as a wireless technology such as IEEE (Institute of Electrical and Electronics Engineers) 802.11 (Wi-Fi), IEEE 802.16 (WiMAX), IEEE 802-20, evolved UTRA (E-UTRA), and the like. IEEE 802.16m is evolution of IEEE 802.16e, which provides backward compatibility with systems based on IEEE 802.16e. UTRA is a part of a universal mobile telecommunications system (UMTS). 3GPP (3rd-generation partnership project) LTE (long-term evolution) is a part of E-UMTS (evolved UMTS) using evolved-UMTS terrestrial radio access (E-UTRA), which adopts OFDMA in a downlink and SC-FDMA in an uplink. As described above, the embodiments may be applied to radio access technologies that have been launched or commercialized, and may be applied to radio access technologies that are being developed or will be developed in the future.

The UE used in the specification must be interpreted as a broad meaning that indicates a device including a wireless communication module that communicates with a base station in a wireless communication system. For example, the UE includes user equipment (UE) in WCDMA, LTE, NR, HSPA, IMT-2020 (5G or New Radio), and the like, a mobile station in GSM, a user terminal (UT), a subscriber station (SS), a wireless device, and the like. In addition, the UE may be a portable user device, such as a smart phone, or may be a vehicle, a device including a wireless communication module in the vehicle, and the like in a V2X communication system according to the usage type thereof. In the case of a machine-type communication (MTC) system, the UE may refer to an MTC terminal, an M2M terminal, or a URLLC terminal, which employs a communication module capable of performing machine-type communication.

A base station or a cell in the present specification refers to an end that communicates with a UE through a network and encompasses various coverage regions such as a Node-B, an evolved Node-B (eNB), a gNode-B, a low-power node (LPN), a sector, a site, various types of antennas, a base transceiver system (BTS), an access point, a point (e.g., a transmission point, a reception point, or a transmission/reception point), a relay node, a megacell, a macrocell, a microcell, a picocell, a femtocell, a remote radio head (RRH), a radio unit (RU), a small cell, and the like. In addition, the cell may be used as a meaning including a bandwidth part (BWP) in the frequency domain. For example, the serving cell may refer to an active BWP of a UE.

The various cells listed above are provided with a base station controlling one or more cells, and the base station may be interpreted as two meanings. The base station may be 1) a device for providing a megacell, a macrocell, a microcell, a picocell, a femtocell, or a small cell in connection with a wireless region, or the base station may be 2) a wireless region itself. In the above description 1), the base station may be the devices controlled by the same entity and providing predetermined wireless regions or all devices interacting with each other and cooperatively configuring a wireless region. For example, the base station may be a point, a transmission/reception point, a transmission point, a reception point, and the like according to the configuration method of the wireless region. In the above description 2), the base station may be the wireless region in which a user equipment (UE) may be enabled to transmit data to and receive data from the other UE or a neighboring base station.

In this specification, the cell may refer to coverage of a signal transmitted from a transmission/reception point, a component carrier having coverage of a signal transmitted from a transmission/reception point (or a transmission point), or a transmission/reception point itself.

An uplink (UL) refers to a scheme of transmitting data from a UE to a base station, and a downlink (DL) refers to a scheme of transmitting data from a base station to a UE. The downlink may mean communication or communication paths from multiple transmission/reception points to a UE, and the uplink may mean communication or communication paths from a UE to multiple transmission/reception points. In the downlink, a transmitter may be a part of the multiple transmission/reception points, and a receiver may be a part of the UE. In addition, in the uplink, the transmitter may be a part of the UE, and the receiver may be a part of the multiple transmission/reception points.

The uplink and downlink transmit and receive control information over a control channel, such as a physical downlink control channel (PDCCH) and a physical uplink control channel (PUCCH). The uplink and downlink transmit and receive data over a data channel such as a physical downlink shared channel (PDSCH) and a physical uplink shared channel (PUSCH). Hereinafter, the transmission and reception of a signal over a channel, such as PUCCH, PUSCH, PDCCH, PDSCH, or the like, may be expressed as "PUCCH, PUSCH, PDCCH, PDSCH, or the like is transmitted and received".

For the sake of clarity, the following description will focus on 3GPP LTE/LTE-A/NR (New Radio) communication systems, but technical features of the disclosure are not limited to the corresponding communication systems.

The 3GPP has been developing a 5G (5th-Generation) communication technology in order to meet the requirements of a next-generation radio access technology of ITU-R after studying 4G (4th-generation) communication technology. Specifically, 3GPP is developing, as a 5G communication technology, LTE-A pro by improving the LTE-Advanced technology so as to conform to the requirements of ITU-R and a new NR communication technology that is totally different from 4G communication technology. LTE-A pro and NR all refer to the 5G communication technology. Hereinafter, the 5G communication technology will be described on the basis of NR unless a specific communication technology is specified.

Various operating scenarios have been defined in NR in consideration of satellites, automobiles, new verticals, and the like in the typical 4G LTE scenarios so as to support an enhanced mobile broadband (eMBB) scenario in terms of services, a massive machine-type communication (mMTC) scenario in which UEs spread over a broad region at a high UE density, thereby requiring low data rates and asynchronous connections, and an ultra-reliability and low-latency (URLLC) scenario that requires high responsiveness and reliability and supports high-speed mobility.

In order to satisfy such scenarios, NR introduces a wireless communication system employing a new waveform and frame structure technology, a low-latency technology, a super-high frequency band (mmWave) support technology, and a forward compatible provision technology. In particular, the NR system has various technological changes in terms of flexibility in order to provide forward compatibility. The primary technical features of NR will be described below with reference to the drawings.

### <Overview of NR System>

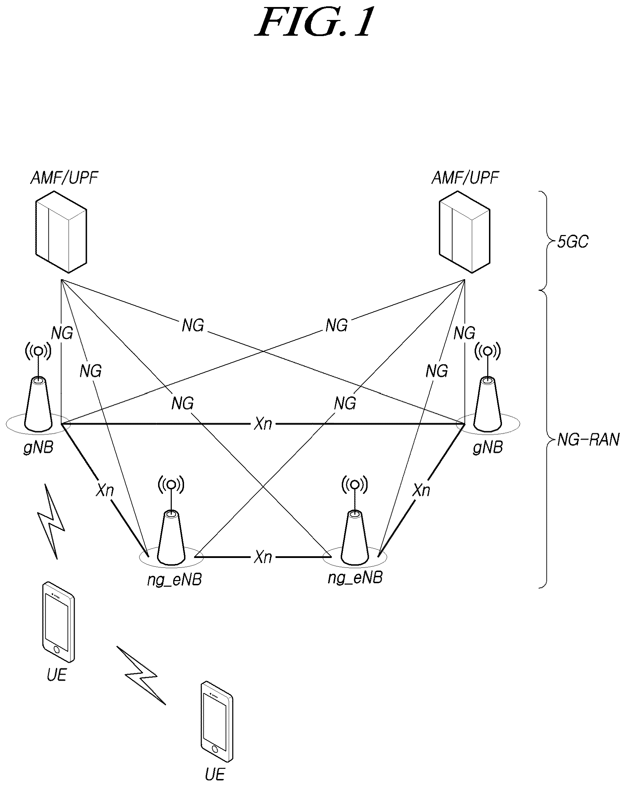

FIG. 1 is a view schematically illustrating an NR system to which the present embodiment is applicable.

Referring to FIG. 1, the NR system is divided into a 5G core network (5GC) and an NG-RAN part. The NG-RAN includes gNBs and ng-eNBs providing user plane (SDAP/PDCP/RLC/MAC/PHY) and user equipment (UE) control plane (RRC) protocol ends. The gNBs or the gNB and the ng-eNB are connected to each other through Xn interfaces. The gNB and the ng-eNB are connected to the 5GC through NG interfaces, respectively. The 5GC may be configured to include an access and mobility management function (AMF) for managing a control plane, such as a UE connection and mobility control function, and a user plane function (UPF) controlling user data. NR supports both frequency bands below 6 GHz (frequency range 1 FR1 FR1) and frequency bands equal to or greater than 6 GHz (frequency range 2 FR2 FR2).

The gNB denotes a base station that provides a UE with an NR user plane and control plane protocol end. The ng-eNB denotes a base station that provides a UE with an E-UTRA user plane and control plane protocol end. The base station described in the present specification should be understood as encompassing the gNB and the ng-eNB. However, the base station may be also used to refer to the gNB or the ng-eNB separately from each other, as necessary.

### <NR Waveform, Numerology, and Frame Structure>

NR uses a CP-OFDM waveform using a cyclic prefix for downlink transmission and uses CP-OFDM or DFT-s-OFDM for uplink transmission. OFDM technology is easy to combine with a multiple-input multiple-output (MIMO) scheme and allows a low-complexity receiver to be used with high frequency efficiency.

Since the three scenarios described above have different requirements for data rates, delay rates, coverage, and the like from each other in NR, it is necessary to efficiently satisfy the requirements for each scenario over frequency bands constituting the NR system. To this end, a technique for efficiently multiplexing radio resources based on a plurality of different numerologies has been proposed.

Specifically, the NR transmission numerology is determined on the basis of subcarrier spacing and a cyclic prefix (CP). As shown in Table 1 below, "µ" is used as an exponential value of 2 so as to be changed exponentially on the basis of 15 kHz.

**[Table 1]**

| µ | Subcarrier spacing | Cyclic prefix | Supported for data | Supported for synch |
|---|---|---|---|---|
| 0 | 15 | normal | Yes | Yes |
| 1 | 30 | normal | Yes | Yes |
| 2 | 60 | Normal, Extended | Yes | No |
| 3 | 120 | normal | Yes | Yes |
| 4 | 240 | normal | No | Yes |

As shown in Table 1 above, NR may have five types of numerologies according to subcarrier spacing. This is different from LTE, which is one of the 4G-communication technologies, in which the subcarrier spacing is fixed to 15 kHz. Specifically, in NR, subcarrier spacing used for data transmission is 15, 30, 60, or 120 kHz, and subcarrier spacing used for synchronization signal transmission is 15, 30, 120, or 240 kHz. In addition, an extended CP is applied only to the subcarrier spacing of 60 kHz. A frame that includes 10 subframes each having the same length of 1 ms and has a length of 10 ms is defined in the frame structure in NR. One frame may be divided into half frames of 5 ms, and each half frame includes 5 subframes. In the case of a subcarrier spacing of 15 kHz, one subframe includes one slot, and each slot includes 14 OFDM symbols.

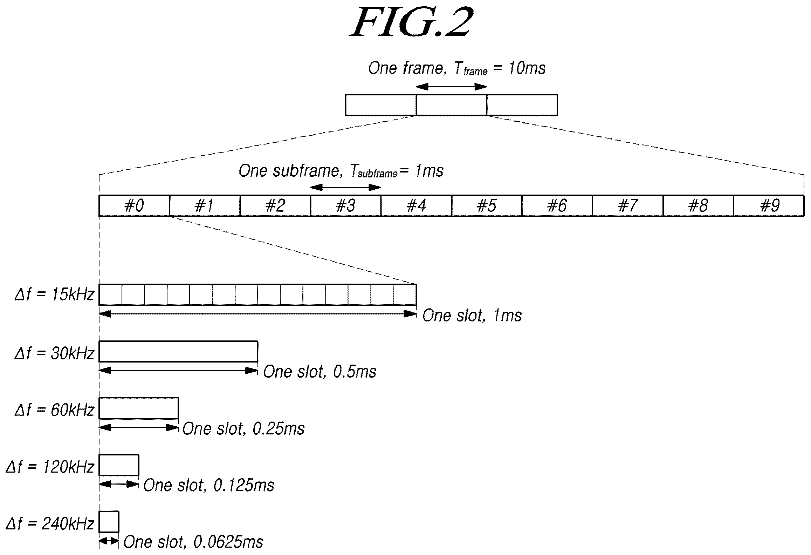

FIG. 2 is a view for explaining a frame structure in an NR system to which the present embodiment may be applied.

Referring to FIG. 2, a slot includes 14 OFDM symbols, which are fixed, in the case of a normal CP, but the length of the slot in the time domain may be varied depending on subcarrier spacing. For example, in the case of a numerology having a subcarrier spacing of 15 kHz, the slot is configured to have the same length of 1 ms as that of the subframe. On the other hand, in the case of a numerology having a subcarrier spacing of 30 kHz, the slot includes 14 OFDM symbols, but one subframe may include two slots each having a length of 0.5 ms. That is, the subframe and the frame may be defined using a fixed time length, and the slot may be defined as the number of symbols such that the time length thereof is varied depending on the subcarrier spacing.

NR defines a basic unit of scheduling as a slot and also introduces a minislot (or a subslot or a non-slot-based schedule) in order to reduce a transmission delay of a radio section. If wide subcarrier spacing is used, the length of one slot is shortened in inverse proportion thereto, thereby reducing a transmission delay in the radio section. A minislot (or subslot) is intended to efficiently support URLLC scenarios, and the minislot may be scheduled in 2, 4, or 7 symbol units.

In addition, unlike LTE, NR defines uplink and downlink resource allocation as a symbol level in one slot. In order to reduce a HARQ delay, the slot structure capable of directly transmitting HARQ ACK/NACK in a transmission slot has been defined. Such a slot structure is referred to as a "self-contained structure", which will be described.

NR was designed to support a total of 256 slot formats, and 62 slot formats thereof are used in 3GPP Rel-15. In addition, NR supports a common frame structure constituting an FDD or TDD frame through combinations of various slots. For example, NR supports i) a slot structure in which all symbols of a slot are configured for a downlink, ii) a slot structure in which all symbols are configured for an uplink, and iii) a slot structure in which downlink symbols and uplink symbols are mixed. In addition, NR supports data transmission that is scheduled to be distributed to one or more slots. Accordingly, the base station may inform the UE of whether the slot is a downlink slot, an uplink slot, or a flexible slot using a slot format indicator (SFI). The base station may inform a slot format by instructing, using the SFI, the index of a table configured through UE-specific RRC signaling. Further, the base station may dynamically instruct the slot format through downlink control information (DCI) or may statically or quasi-statically instruct the same through RRC signaling.

### <Physical Resources of NR>

With regard to physical resources in NR, antenna ports, resource grids, resource elements, resource blocks, bandwidth parts, and the like are taken into consideration.

The antenna port is defined to infer a channel carrying a symbol on an antenna port from the other channel carrying another symbol on the same antenna port. If large-scale properties of a channel carrying a symbol on an antenna port can be inferred from the other channel carrying a symbol on another antenna port, the two antenna ports may have a quasi-co-located or quasi-co-location (QC/QCL) relationship. The large-scale properties include at least one of delay spread, Doppler spread, a frequency shift, an average received power, and a received timing.

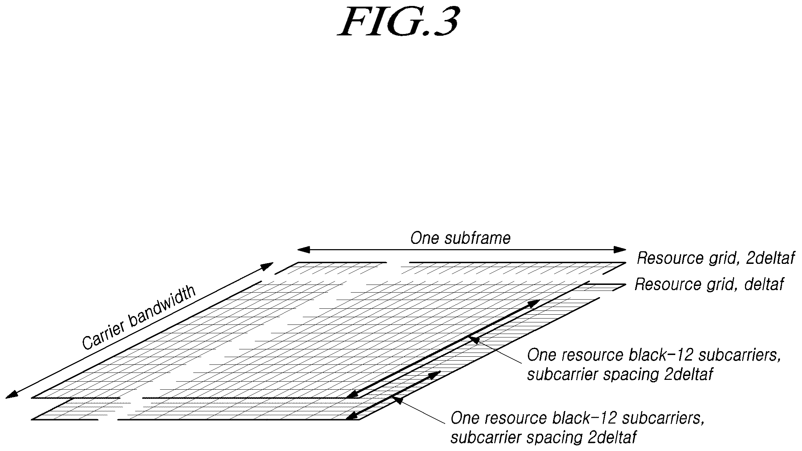

FIG. 3 illustrates resource grids supported by a radio access technology in accordance with embodiments of the present disclosure.

Referring to FIG. 3, resource grids may exist according to respective numerologies because NR supports a plurality of numerologies in the same carrier. In addition, the resource grids may exist depending on antenna ports, subcarrier spacing, and transmission directions.

A resource block includes 12 subcarriers and is defined only in the frequency domain. In addition, a resource element includes one OFDM symbol and one subcarrier. Therefore, as shown in FIG. 3, the size of one resource block may be varied according to the subcarrier spacing. Further, "Point A" that acts as a common reference point for the resource block grids, a common resource block, and a virtual resource block are defined in NR.

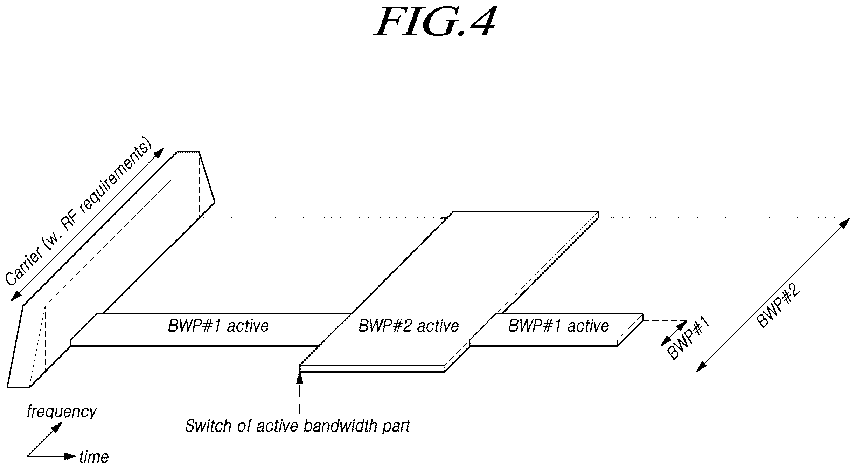

FIG. 4 illustrates bandwidth parts supported by a radio access technology in accordance with embodiments of the present disclosure.

Unlike LTE in which the carrier bandwidth is fixed to 20 MHz, the maximum carrier bandwidth is configured as 50 MHz to 400 MHz depending on the subcarrier spacing in NR. Therefore, it is not assumed that all UEs use the entire carrier bandwidth. Accordingly, as shown in FIG. 4, bandwidth parts (BWPs) may be specified within the carrier bandwidth in NR so that the UE may use the same. In addition, the bandwidth part may be associated with one numerology, may include a subset of consecutive common resource blocks, and may be activated dynamically over time. The UE has up to four bandwidth parts in each of the uplink and the downlink. The UE transmits and receives data using an activated bandwidth part during a given time.

In the case of a paired spectrum, uplink and downlink bandwidth parts are configured independently. In the case of an unpaired spectrum, in order to prevent unnecessary frequency re-tuning between a downlink operation and an uplink operation, the downlink bandwidth part and the uplink bandwidth part are configured in pairs to share a center frequency.

### <Initial Access in NR>

In NR, a UE performs a cell search and a random access procedure in order to access and communicates with a base station.

The cell search is a procedure of the UE for synchronizing with a cell of a corresponding base station using a synchronization signal block (SSB) transmitted from the base station and acquiring a physical-layer cell ID and system information.

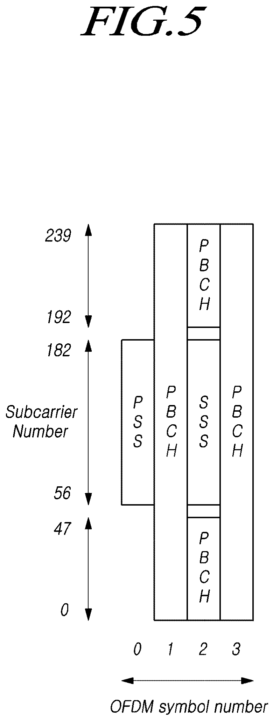

FIG. 5 illustrates an example of a synchronization signal block in a radio access technology in accordance with embodiments of the present disclosure.

Referring to FIG. 5, the SSB includes a primary synchronization signal (PSS) and a secondary synchronization signal (SSS), which occupy one symbol and 127 subcarriers, and PBCHs spanning three OFDM symbols and 240 subcarriers.

The UE monitors the SSB in the time and frequency domain, thereby receiving the SSB.

The SSB may be transmitted up to 64 times for 5 ms. A plurality of SSBs are transmitted by different transmission beams within a time of 5 ms, and the UE performs detection on the assumption that the SSB is transmitted every 20 ms based on a specific beam used for transmission. The number of beams that may be used for SSB transmission within 5 ms may be increased as the frequency band is increased. For example, up to 4 SSB beams may be transmitted at a frequency band of 3 GHz or less, and up to 8 SSB beams may be transmitted at a frequency band of 3 to 6 GHz. In addition, the SSBs may be transmitted using up to 64 different beams at a frequency band of 6 GHz or more.

One slot includes two SSBs, and a start symbol and the number of repetitions in the slot are determined according to subcarrier spacing as follows.

Unlike the SS in the typical LTE system, the SSB is not transmitted at the center frequency of a carrier bandwidth. That is, the SSB may also be transmitted at the frequency other than the center of the system band, and a plurality of SSBs may be transmitted in the frequency domain in the case of supporting a broadband operation. Accordingly, the UE monitors the SSB using a synchronization raster, which is a candidate frequency position for monitoring the SSB. A carrier raster and a synchronization raster, which are the center frequency position information of the channel for the initial connection, were newly defined in NR, and the synchronization raster may support a fast SSB search of the UE because the frequency spacing thereof is configured to be wider than that of the carrier raster.

The UE may acquire an MIB over the PBCH of the SSB. The MIB (master information block) includes minimum information for the UE to receive remaining minimum system information (RMSI) broadcast by the network. In addition, the PBCH may include information on the position of the first DM-RS symbol in the time domain, information for the UE to monitor SIB1 (e.g., SIB1 numerology information, information related to SIB1 CORESET, search space information, PDCCH-related parameter information, etc.), offset information between the common resource block and the SSB (the position of an absolute SSB in the carrier is transmitted via SIB1), and the like. The SIB1 numerology information is also applied to some messages used in the random access procedure for the UE to access the base station after completing the cell search procedure. For example, the numerology information of SIB1 may be applied to at least one of the messages 1 to 4 for the random access procedure.

The above-mentioned RMSI may mean SIB1 (system information block 1), and SIB1 is broadcast periodically (e.g., 160 ms) in the cell. SIB1 includes information necessary for the UE to perform the initial random access procedure, and SIB1 is periodically transmitted over a PDSCH. In order to receive SIB1, the UE must receive numerology information used for the SIB1 transmission and the CORESET (control resource set) information used for scheduling of SIB1 over a PBCH. The UE identifies scheduling information for SIB1 using SI-RNTI in the CORESET. The UE acquires SIB1 on the PDSCH according to scheduling information. The remaining SIBs other than SIB1 may be periodically transmitted, or the remaining SIBs may be transmitted according to the request of the UE.

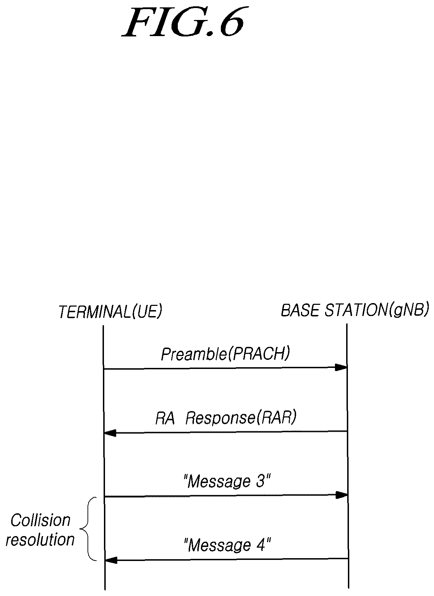

FIG. 6 is a view for explaining a random access procedure in a radio access technology to which the present embodiment is applicable.

Referring to FIG. 6, if a cell search is completed, the UE transmits a random access preamble for random access to the base station. The random access preamble is transmitted over a PRACH. Specifically, the random access preamble is periodically transmitted to the base station over the PRACH that includes consecutive radio resources in a specific slot repeated. In general, a contention-based random access procedure is performed when the UE makes initial access to a cell, and a non-contention-based random access procedure is performed when the UE performs random access for beam failure recovery (BFR).

The UE receives a random access response to the transmitted random access preamble. The random access response may include a random access preamble identifier (ID), UL Grant (uplink radio resource), a temporary C-RNTI (temporary cell-radio network temporary identifier), and a TAC (time alignment command). Since one random access response may include random access response information for one or more UEs, the random access preamble identifier may be included in order to indicate the UE for which the included UL Grant, temporary C-RNTI, and TAC are valid. The random access preamble identifier may be an identifier of the random access preamble received by the base station. The TAC may be included as information for the UE to adjust uplink synchronization. The random access response may be indicated by a random access identifier on the PDCCH, i.e., a random access-radio network temporary identifier (RA-RNTI).

Upon receiving a valid random access response, the UE processes information included in the random access response and performs scheduled transmission to the base station. For example, the UE applies the TAC and stores the temporary C-RNTI. In addition, the UE transmits, to the base station, data stored in the buffer of the UE or newly generated data using the UL Grant. In this case, information for identifying the UE must be included in the data.

Lastly, the UE receives a downlink message to resolve the contention.

### <NR CORESET>

The downlink control channel in NR is transmitted in a CORESET (control resource set) having a length of 1 to 3 symbols, and the downlink control channel transmits uplink/downlink scheduling information, an SFI (slot format index), TPC (transmit power control) information, and the like.

As described above, NR has introduced the concept of CORESET in order to secure the flexibility of a system. The CORESET (control resource set) refers to a time-frequency resource for a downlink control signal. The UE may decode a control channel candidate using one or more search spaces in the CORESET time-frequency resource. CORESET-specific QCL (quasi-colocation) assumption is configured and is used for the purpose of providing information on the characteristics of analogue beam directions, as well as delay spread, Doppler spread, Doppler shift, and an average delay, which are the characteristics assumed by existing QCL.

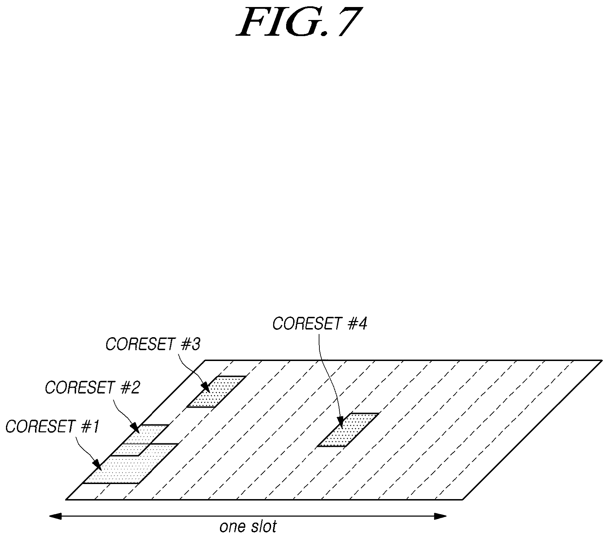

FIG. 7 illustrates CORESET.

Referring to FIG. 7, CORESETs may exist in various forms within a carrier bandwidth in a single slot, and the CORESET may include a maximum of 3 OFDM symbols in the time domain. In addition, the CORESET is defined as a multiple of six resource blocks up to the carrier bandwidth in the frequency domain.

A first CORESET, as a portion of the initial bandwidth part, is designated (e.g., instructed, assigned) through an MIB in order to receive additional configuration information and system information from a network. After establishing a connection with the base station, the UE may receive and configure one or more pieces of CORESET information through RRC signaling.

In this specification, a frequency, a frame, a subframe, a resource, a resource block, a region, a band, a subband, a control channel, a data channel, a synchronization signal, various reference signals, various signals, or various messages in relation to NR (New Radio) may be interpreted as meanings used at present or in the past or as various meanings to be used in the future.

The disclosure defines the purpose for reference signal resources allocated for beams used in an AI/ML model for a UE performing beam management using AI/ML. The UE may perform beam measurement and model processes based on the set AI/ML purpose and report the beam measurement results for each AI/ML purpose to the base station.

### Beam management in 3GPP NR

The beam management method of the 3GPP NR may be divided into an initial access stage and a post-cell connection establishment stage. The UE performing the initial access procedure configures the initial Tx/Rx beam of the UE through the RACH procedure. To provide gNB tx.beam (e.g., gNB transmit beam) configuration to the UE without cell connection, the base station periodically and repeatedly transmits the SSBs mapped with beams in different directions (e.g., SSBs are transmitted every 20ms period within 5ms by default). The UE may select the qualified SSB through signal measurement for the periodically transmitted SSBs and notify the base station of information about the selected tx beam by transmitting the PRACH primer mapped for the SSB.

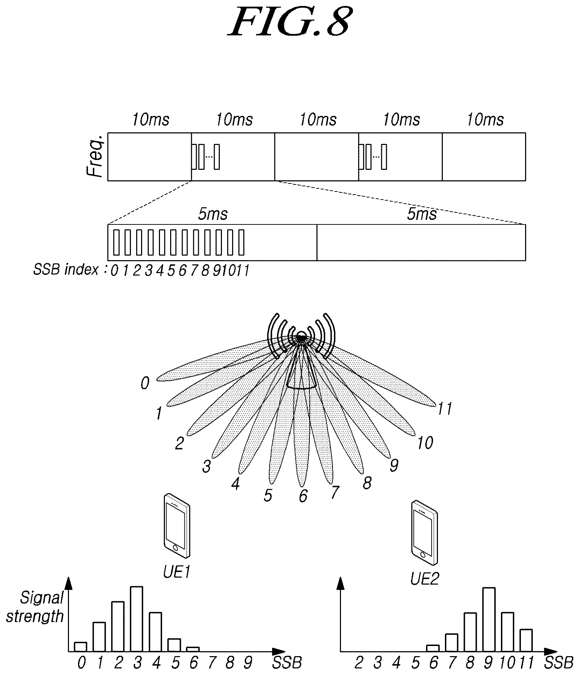

FIG. 8 is a view illustrating an operation in which two UEs perform initial beam management at two different positions during a beam transmission operation by a base station.

Referring to FIG. 8, the base station may transmit the synchronization signal block SSB using specific time frequency resources in a preset frame. In this case, the base station may perform a beam sweeping operation by forming various beams.

For example, the beams may be transmitted by being spatially divided from the beam indexes 0 to 11. If UE 1 performs a measurement on the SSB, the signal strength for beam index number 3, which matches the beam direction, is the largest, while the strength is measured as low for the surrounding beams, as illustrated in FIG. 8. Likewise, UE 2 may measure the signal strength for beam index number 9 by positional characteristics. Each UE may perform an initial access to the base station by performing a random access procedure based on the signal strength measurement result for the SSB.

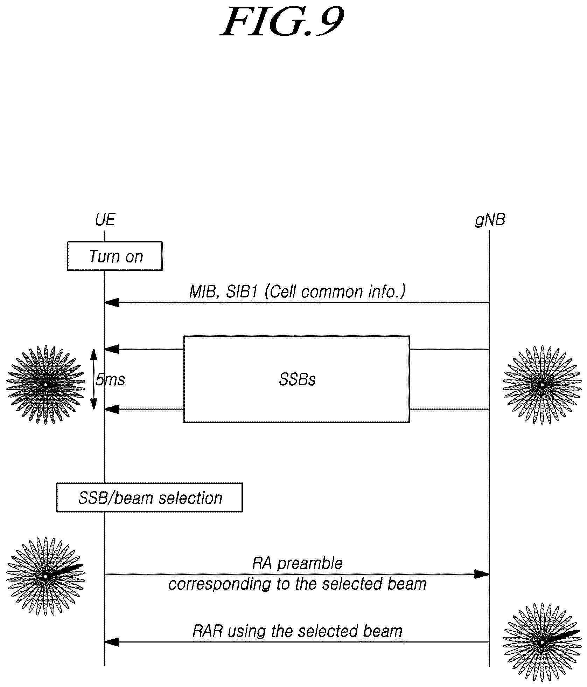

FIG. 9 is an example view illustrating an initial access procedure of a UE and a base station.

Referring to FIG. 9, an initial access procedure performed by a UE in NR proceeds as follows.
1. The UE receives cell-related parameter information (e.g., PRACH information corresponding to each SSB) required for the initial connection step through the system information message.
2. The UE measures the RSRP for the periodically transmitted SSB.
3. The UE performs beam (SSB) selection based on the measurement result of the SSB. For example, the UE may select the beam exhibiting the highest RSRP based on the measurement result.
4. The UE may notify the base station of the selected initial beam information by transmitting the preamble belonging to the PRACH resource corresponding to the selected beam to the base station.
5. The UE may receive a random access response to the transmitted random access preamble through the selected beam. Thereafter, access to the initial cell may be performed through transmission/reception of Msg 3 and Msg 4.

As described above, the base station that does not know the position/beam information about the UE that first entered (i.e., a UE that performs a contention-based random access procedure (CBRA)) may commonly at the cell level set up to 64 beams for a beam setting of a UE with no connection. The UE performs an operation of sequentially measuring all beams to discover the optimal beams at its position. As the number of beams in the cell increases, a time delay may occur in beam selection and cell connection, and the UE may be required to measure more beams, which may increase the power consumption of the UE.

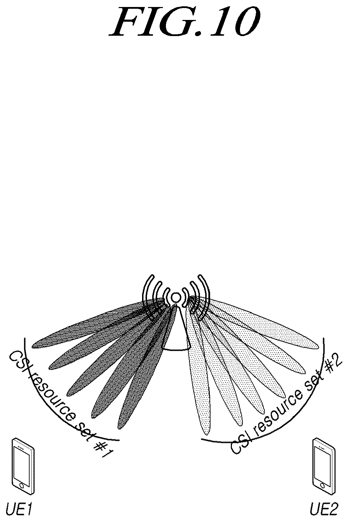

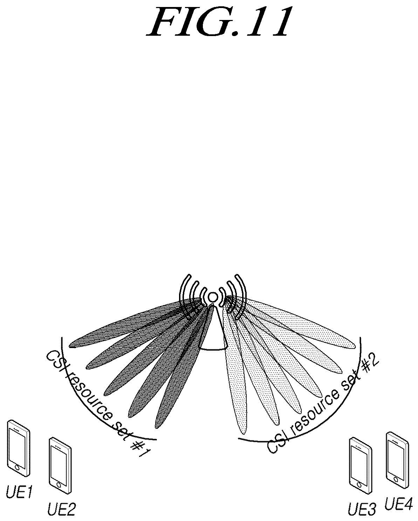

FIGS. 10 and 11 are views illustrating setting a candidate beam allocated to a UE.

To address the foregoing issues, the base station may estimate the approximate position/beam of the initially accessing UE by mapping a wider beam for the SSB and, after the UE accesses the cell, may set a narrow beam through a beam refinement operation. However, while the narrow beam provides a high data rate to the UE, it is sensitive to the movement of the UE or environmental changes, making disconnections more likely. To that end, the base station allocates the CSI resource (CSI-RS/SSB) to which the candidate beam is mapped to the UE in a UE-specific manner as illustrated in FIG. 10, so that the UE continuously measures the ambient beam strength and reports the measurement result to the base station. This may be set by the base station through a CSI resource configuration and a CSI report configuration.

The UE configured with the beam report performs reporting based on the configuration of the base station through the measurement of the reference signal (RS) allocated to the UE. It follows the CSI framework defined by 3GPP. However, the UE-specific CSI configuration method has a problem in that as the number of UEs in the cell increases, the RS resources allocated per UE also increase rapidly. To alleviate the resource overhead problem, the base station may choose a method of allocating the same candidate beam (CSI resource) to UEs at similar positions, as illustrated in FIG. 11 (UE group-specific CSI resource configuration). However, if UEs with different mobility share the same resource, a problem arises where a new candidate beam resource should be allocated to UEs outside the resource area arises. If a UE with high/medium mobility is assigned minimum candidate beams as a way to reduce resource overhead, the UE experiences frequent RRC reconfiguration, and candidate beam reconfiguration through RRC causes a relatively large delay, which may cause beam disconnection. The base station may operate the candidate beam by appropriately increasing the number of beams belonging to the CSI resource to alleviate such an issue. However, a trade-off issue occurs in which from a UE perspective, the measurement burden increases due to the increased number of beams.

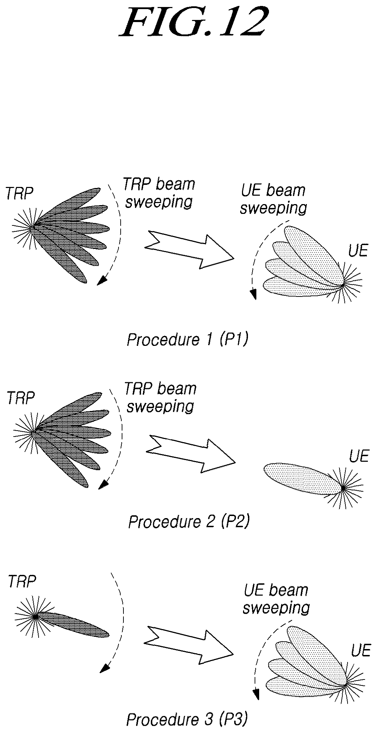

Currently in NR, beam management is generally categorized into three (P1, P2, and P3) in terms of the physical layer. Referring to FIG. 12, P1 refers to an operation of discovering a transmission/reception (tx/rx) beam pair while simultaneously performing UE beam sweeping, similar to the beam configuration performed during the initial access procedure. The UE entering the connected mode identifies the beams, set via the CSI resource set configuration by the base station are to be swept, and performs signal strength measurements on the TRP beam. If the TRP beam of the UE is selected through P2, the base station continuously transmits the selected beam through P3. The UE may select a UE beam while conducting UE beam sweeping. The specific beam selection at this point is implementation dependent. This operation may be applicable to both DL/UL.

Beam sweeping uses a method for implicitly indicating the beam information by mapping it to the RS resource information, where the base station informs the UE of the reference signal resource information through a specific candidate beam (CSI resource set) setting. In other words, the base station is able to identify the beam information it has mapped through the index information implicitly associated with the RS using the RS resource indicator (RI), rather than informing the UE of the actual beam index. This is configured using the 3GPP CSI framework, and the UE implicitly reports RSRP information about four optimal beams RI to the base station by measuring the strength of RS for the resource configured by the base station.

The method for reporting this information also follows the RRC configuration of the base station, and it is defined to be configured as one of three methods: periodic reporting, aperiodic reporting, and semi-persistent reporting.

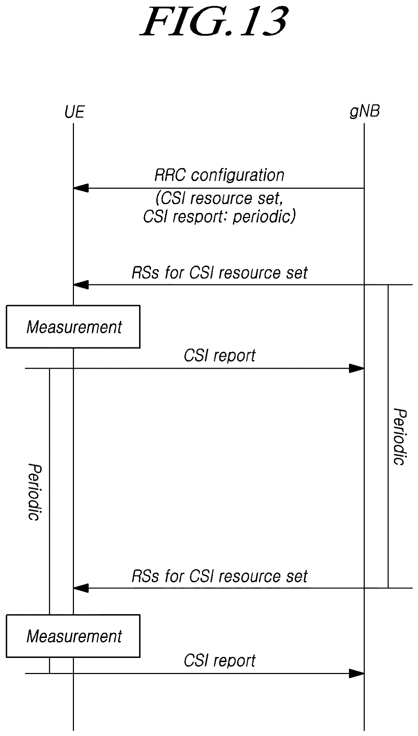

FIGS. 13 to 15 are diagrams illustrating a beam reporting procedure according to a reporting method.

As illustrated in FIG. 13, the periodic CSI reporting method is triggered through RRC configuration. The UE receives the configuration information for the CSI-related RS resources and reporting method via an RRC message, measures the beam signal strength using RSs periodically transmitted according to the configuration, and repeatedly reports the corresponding measurement results.

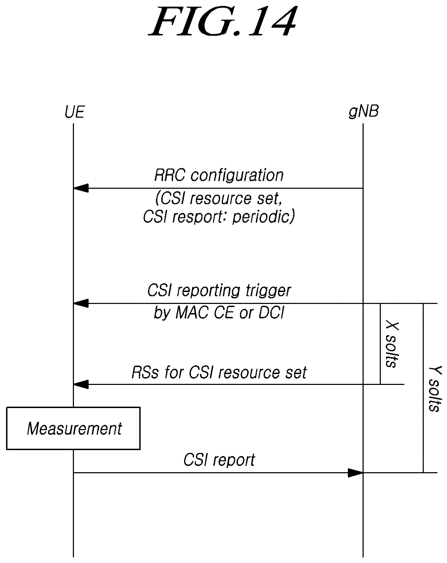

In FIG. 14, although the CSI-related RS resources and reporting method are configured through the RRC message in the aperiodic CSI reporting method, beam measurement through RS is not performed unless a trigger message is received at the lower layer. Only when a trigger indication is received via MAC CE or DCI, the UE measures the beam signal strength based on a one-time RS reception and reports the result once.

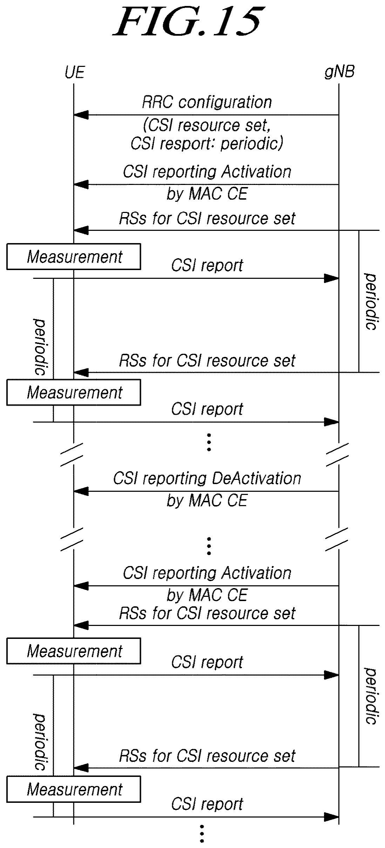

FIG. 15 is a semi-persistent CSI reporting method, which is an intermediate scheme between the aperiodic CSI reporting method and the periodic reporting method, and the UE once activated by MAC CE and configured with SCI-related RS resources and reporting method via the RRC message, periodically performs CSI reporting until a deactivation message is received. If the UE receives a deactivation message for CSI reporting via MAC CE, CSI reporting is stopped.

To mitigate the delay in such beam search (measurement) and UE power consumption, it is considered to apply an AI/ML model. The radio interface may be enhanced with a function that enable improved support for an AI/ML-based algorithm to reduce complexity/overhead.

Key use cases for applying the application of the AI/ML model include the following.
o CSI frequency band enhancement, e.g., overhead reduction, enhanced accuracy, and prediction.
o Beam management, e.g., temporal and/or spatial domain prediction to reduce overhead and standby time and enhance beam selection accuracy.
o Enhance positioning accuracy for various scenarios including scenarios with harsh NLOS conditions.

In the regard, the following terms may be defined for AI/ML-applied wireless communication.

Data collection refers to a process by which a network node, management entity, or UE collects data for the purpose of AI/ML model training, data analysis, and inference.

The AI/ML model refers to a data driven algorithm that produces outputs from inputs by applying AI/ML technology. AI/ML model training refers to the process of learning input-output relationship from data and producing an AI/ML model ready for inference.. AI/ML model inference refers to the process of generating a series of outputs based on a series of inputs using a trained AI/ML model. AI/ML model validation refers to a sub process of training that evaluates the quality of the AI/ML model using data sets different from those used for model training. AI/ML model testing refers to a sub process of training to evaluate the performance of the final AI/ML model using data sets different from those used for model training and validation. Unlike AI/ML model validation, the testing does not involve any subsequent model adjustments.

The UE-side AI/ML model refers to an AI/ML model in which inference is performed entirely by the UE. The Network-side AI/ML model refers to an AI/ML model in which inference is performed entirely on the network. One-sided AI/ML model refers to a UE-side AI/ML model or a network-side AI/ML model. Two-sided AI/ML model refers to a paired AI/ML model in which joint inference is performed. Here, joint inference refers to AI/ML inference that is collaboratively performed by both the UE and network. In other words, the initial partial inference is performed by the UE, and the remaining inference is carried out by the gNB or vice versa.

AI/ML model transfer refers to transmitting an AI/ML model over a wireless interface, either as parameters of a known model structure at the receiving side or a new model with the parameters. The transfer may involve either a full model or a partial model. Model download refers to the transfer of a model from the network to the UE. Model upload refers to transferring a model from the UE to the network.

Federated learning or federated training refers to a machine learning technique in which the AI/ML model is trained across multiple distributed edge nodes (e.g., UE, gNB), each performing local model training using its own local data samples. This technique involves multiple rounds of model interactions without exchanging local data samples. Offline field data refers to data collected in the field and used for offline AI/ML model training. Online field data refers to data collected in the field and used for real-time or online AI/ML model training.

Model monitoring refers to the procedure for monitoring (e.g., evaluating) the inference performance of an AI/ML model.

Supervised learning refers to the process of training a model using inputs paired with corresponding labels. Unsupervised learning refers to the process of training a model without labeled data. Semi-supervised learning refers to the process of training a model by using a combination of labeled data and unlabeled data. Reinforcement learning (RL) refers to the process of training the AI/ML model from inputs (i.e., states) and feedback signals (i.e., rewards) due to the model's output (i.e., actions) in an environment where the model interacts.

Model activation refers to activating (e.g., enabling) an AI/ML model to perform a specific function. Model deactivation refers to deactivating (e.g., disabling) an AI/ML model from performing a specific function. Model switching refers to deactivating the currently active AI/ML model and activating another AI/ML model for a specific function.

When applying an AI/ML model, the following network-UE collaboration levels are considered.
1. Level x: No collaboration.
2. Level y: Signaling-based collaboration without model transfer.
3. Level z: Signal-based collaboration with model transmission.

BM-Case1 and BM-Case2 are defined to support characterization and basic performance evaluation for AI/ML-based beam management as follows.

BM-Case1: downlink (DL) beam prediction in the spatial domain for beam Set A based on the measurement results of beam Set B.

BM-Case2: downlink (DL) beam prediction in the temporal domain for beam set A, based on the past measurement results of beam set B.

In this case, for both BM-Case1 and BM-Case2, the beams sets A and B may reside within the same frequency range.

Set A and Set B may be configured differently: for example Set B may be a sub set of Set A, or Set A may include narrower beams while Set B includes wider beams. Here, Set A may be defined for DL beam prediction and Set B may be defined for DL beam measurement.

As described above, the impact of the specification was examined on the UE's beam measurement-related reporting in to the context of NW-side model monitoring for BM-Case1 (spatial beam prediction) and BM-Case2 (temporal beam prediction), both of which pertain to the beam management procedure. Network-side model monitoring may be applied to both network-side AI/ML models and UE-side AI/ML models.

Furthermore, the UE may collect data for various purposes such as model training, model inference, and model monitoring and transmit this data to the base station. The UE may also utilize the collected data for internal processes or report/transmit the resulting data or outcomes to the base station.

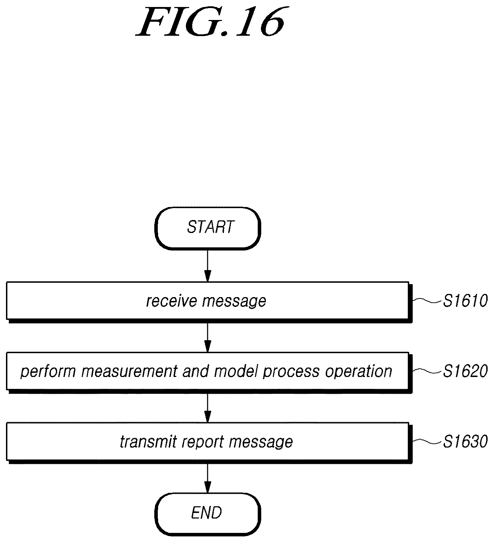

FIG. 16 is a flowchart illustrating a UE operation according to an embodiment.

Referring to FIG. 16, a UE performing a beam management operation may perform a step of receiving, from the base station, a message including at least one piece of resource information for a reference signal and an indicator indicating a modeling process associated with the at least one piece of resource information (S 1610).

For example, the model process may be configured to be identified or categorized according to the purpose of use of the reference signal associated with each of the at least one piece of resource information in an artificial intelligence or machine learning model configured to perform beam prediction. As an example, the model process may be categorized as any one of an input, an output, or model monitoring for the artificial intelligence or machine learning model. As another example, the model process may be configured to be classified as any one of training, inference, and monitoring. In yet another example, the model process may be configured to be dynamically classified based on two or more preset purposes.

If the model process is set as an input, the measurement result for the reference signal associated with the corresponding resource information may be used as an input value to the artificial intelligence or machine learning model. If the model process is set as an output, the measurement result for the reference signal associated with the corresponding resource information may be used to predict an output value of the artificial intelligence or machine learning model. Alternatively, if the model process is set as monitoring, the model performance may be monitored by comparing the measurement result for the reference signal associated with the corresponding resource information with the output value of the artificial intelligence or machine learning model.

For example, the reference signal may be a signal such CSI-RS or SSB transmitted from the base station to the UE.

Further, the message may be delivered through higher layer signaling. For example, the message may be an RRC message, and the resource information for the reference signal and the indicator may be configured and mapped.

For example, the indicator may be configured to be associated with each of the at least one piece of resource information or with each resource information set. In one example, the indicator may be associated with each piece of resource information, indicating the purpose of the reference signal associated with the corresponding resource information. In another example, the indicator may be configured to be associated with each of two or more resource information sets, indicating the purpose of the reference signal associated with the resource information included in the corresponding resource information set. In yet another example, the indicator may be configured to be associated with the resource information set, and the corresponding resource information set may be used for different reference signals. In other words, the resource information for the first reference signal and the resource information for the second reference signal may be set as the same resource information set, and the indicator may be configured to be associated with the corresponding resource information set.

As described above, each indicator may be represented as an index and may be set as a 1-bit or 2-bit value as needed.

Further, the message may include configuration information for a report message to be used when the UE reports the measurement result or the result of the model process to the base station. For example, the configuration information for the report message may include transmission period, transmission resources, and identification information for the information included in the report message.

The UE may perform a control step of measurement the reference signal based on the message to derive a measurement result and executing the model process associated with the indicator using the measurement result (S1620).

For example, the UE receives the reference signal from the resource information included in the message. If the reference signal is received, the UE may measure the quality or strength of the reference signal. For example, the UE may measure RSRP, RSRQ, or similar metrics for the reference signal associated with the corresponding resource information to derive the measurement result.

Further, the UE may execute the model process associated with the reference signal based on the indicator included in the message. For example, the UE may input the measurement result as an input value of the artificial intelligence or machine learning model to perform a training process. Alternatively, when the indicator indicates inference, the UE may infer a measurement result for the resource information as an output value of the artificial intelligence or machine learning model. Alternatively, when the indicator indicates model monitoring, the UE may monitor the performance of the model by comparing the measurement result for the reference signal associated with the resource information and the result predicted through the model.

The UE may perform a transmitting step of transmitting a report message including at least one of the measurement result and model process result information to the base station(S1630).

For example, the report message may be transmitted to the base station periodically or aperiodically. The report message may include measurement result information for the reference signal. Further, the report message may include model process result information derived by performing the model process. When the report message is transmitted, the base station should distinguish whether each result included in the measurement result or model process result information is an actual measurement result of the UE or a predicted result generated by the model. For example, the model process result information may include at least one of a measurement result predicted by the model process and a model monitoring result based on a comparison between the measurement result and the predicted measurement result.

To this end, the report message may additionally contain identification information corresponding to each of the measurement result and the model process result information. For example, the identification information may be configured as an index to indicate whether the result value for the individual model process execution result included in each measurement result or model process result information is based on inference or actual measurement. Alternatively, the identification information may be configured to distinguish between a result based on actual measurement, a result based on model output, and a model monitoring result.

Therefore, the identification information may be set as one bit or two bit value. Further, the identification information may be configured and mapped for each piece of information included in the report message.

Accordingly, the UE may perform the model process operation according to the settings of the base station. Further, the base station may identify which model process operation the value in the report message received from the UE is derived from. Accordingly, the base station may also perform model monitoring.

In order to respond to various operation scenarios, the UE may efficiently perform reporting and model monitoring operations through the above-described operations. The following describes the same operations from the base station's perspective.

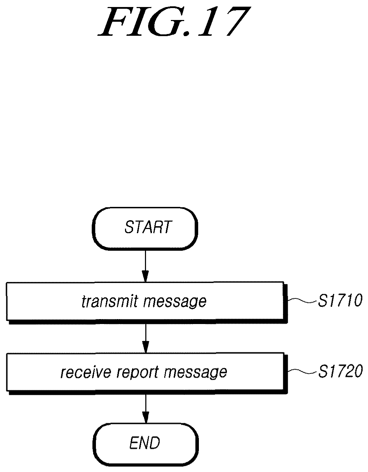

FIG. 17 is a flowchart for describing operations of a base station according to an embodiment.

Referring to FIG. 17, a base station performing a beam management operation may perform a step of transmitting a message to a UE, the message including at least one piece of resource information for a reference signal and an indicator indicating a model process associated with the at least one piece of resource information (S1710).

For example, the model process may be configured to be identified based on the purpose of use of the reference signal associated with each of the at least one piece of resource information in an artificial intelligence or machine learning model configured to perform beam prediction. As an example, the model process may be classified as any one of an input, an output, or model monitoring for the artificial intelligence or machine learning model. As another example, the model process may be configured to be distinguished as any one of training, inference, and monitoring. In yet another example, the model process may be configured to be flexibly identified based on two or more preset purposes.

If the model process is set as an input, the measurement result for the reference signal associated with the corresponding resource information may be used as an input value to the artificial intelligence or machine learning model. If the model process is set as an output, the measurement result for the reference signal associated with the corresponding resource information may be used to predict an output value of the artificial intelligence or machine learning model. Alternatively, if the model process is set as monitoring, the model performance may be monitored by comparing the measurement result for the reference signal associated with the corresponding resource information with the output value of the artificial intelligence or machine learning model may be indicated.

For example, the reference signal may be CSI-RS, SSB, or a similar signal transmitted from the base station to the UE. Further, the message may be delivered through higher layer signaling. For example, the message may be an RRC message, and the resource information for the reference signal and the indicator may be configured and mapped.

For example, the indicator may be configured to be associated with each of the at least one piece of resource information or with each resource information set. In one example, the indicator may be associated with each piece of resource information, indicating the purpose of the reference signal associated with the corresponding resource information. In another example, the indicator may be configured to be associated with each of two or more resource information sets, indicating the purpose of the reference signal associated with the resource information included in the corresponding resource information set. In yet another example, the indicator may be configured to be associated with a resource information set, and the corresponding resource information set may be used for different reference signals. In other words, the resource information for the first reference signal and the resource information for the second reference signal may be set as the same resource information set, and the indicator may be configured to be associated with the corresponding resource information set. As described above, each indicator may be represented as an index and may be set as a 1-bit or 2-bit value as needed.

Further, the message may include configuration information for a report message to be used when the UE reports measurement result or model process result information to the base station. For example, the configuration information for the report message may include transmission period, transmission resources, and identification information for the information included in the report message.

The base station may perform a receiving step of receiving, from the UE, a report message including at least one of (i) a measurement result obtained by the UE based on measurement of the reference signal associated with the message, or (ii) model process result information according to the model process (S1720).

The UE may perform a measurement operation for the reference signal based on the message to derive a measurement result and perform the model process associated with the indicator using the measurement result. Thereafter, the UE may transmit the measurement result and the model process result information to the base station through the report message.

For example, the UE receives the reference signal from the resource information included in the message. If the reference signal is received, the UE may measure the quality or strength of the reference signal. For example, the UE may measure RSRP, RSRQ, or similar metrics for the reference signal associated with the corresponding resource information to derive the measurement result. Further, the UE may execute the model process associated with the reference signal based on the corresponding resource information, according to the indicator included in the message. For example, the UE may input the measurement result as an input value of the artificial intelligence or machine learning model to perform a training process. Alternatively, when the indicator indicates inference, the UE may infer a measurement result for the resource information as an output value of the artificial intelligence or machine learning model. Alternatively, when the indicator indicates model monitoring, the UE may monitor the model performance by comparing the measurement result for the reference signal associated with the resource information and the result predicted by the model.

Meanwhile, the report message may be transmitted to the base station periodically or aperiodically. The report message may include measurement result information for the reference signal. Further, the report message may include model process result information derived by performing the model process. If the report message is received, the base station should distinguish whether each result included in the measurement result or model process result information is an actual measurement result of the UE or a predicted result generated by the model. For example, the model process result information may include at least one of a measurement result predicted by the model process, and a model monitoring result based on a comparison between the measurement result and the predicted measurement result.

To this end, the report message may include identification information corresponding to each of the measurement result and the model process result information. For example, the identification information may be configured as an index to indicate whether the result value for each model process execution result included in each measurement result or model process result information is based on inference or actual measurement. Alternatively, the identification information may be configured to distinguish between a result derived from, actual measurement, a result derived from model output, and the model monitoring result.

Therefore, the identification information may be set as one bit or two bit value. Further, the identification information may be configured and mapped for each piece of information included in the report message.

Through this, the base station may identify which model process operation the value in the report message received from the UE is derived from. Further, the base station may also perform model monitoring.

Hereinafter, each embodiment related to the above-described model monitoring method in beam management using artificial intelligence and machine learning is described in detail with reference to the related drawings. Each of the following embodiments, in whole or in part, may be performed by the above-described UE and base station.

The typical beam management operation in NR causes problems such as increases in system overhead and power consumption of UEs as the numbers of beams and UEs increases. Further, in the case of a UE in the initial cell connection stage, since the UE goes through the process of selecting the initial beam after measuring all of the beams, a delay in cell connection may occur. To address these issues, it is proposed to use an AI/ML model that predicts the overall beam strength through some beam measurements. However, detailed procedures or measures for this have not yet been defined. The disclosure aims to propose a method for efficiently collecting beam information from a UE when the network performs model monitoring for related functions among effective beam management methods using AI/ML.

Regarding AI/ML for beam management, spatial DL beam prediction (BM-Case1) and temporal DL beam prediction (BM-Case2) may be discussed as sub use cases. This allows the strength of the beam for a first set (Set A) to be predicted through the measurement of the beams belonging to a second set (Set B).

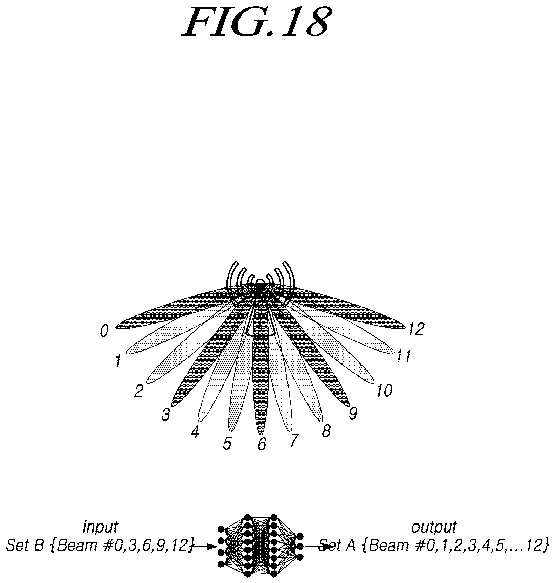

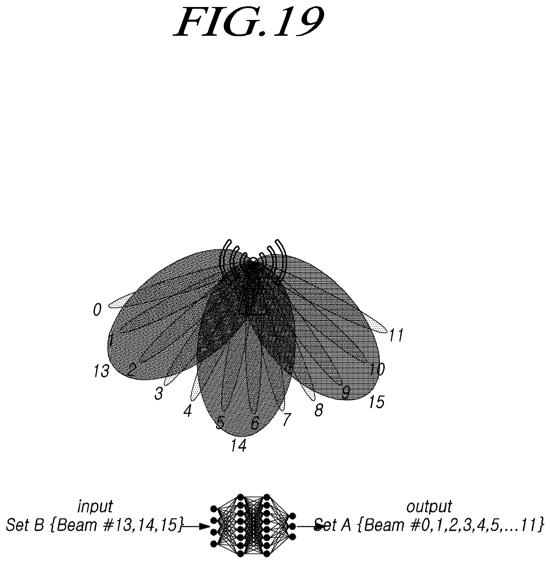

FIGS. 18 and 19 are diagrams illustrating an operation of performing beam measurement and beam prediction using AI/ML according to an embodiment.

Referring to FIGS. 18 and 19, in the case of spatial DL beam prediction, it is considered that Set B is a subset (Alt 1) of Set A as illustrated in 18 or, as illustrated in FIG. 19, a set (Alt 2) composed of different beams in which Set B is composed of wide beams, and Set A is composed of narrow beams. Further, in the case of temporal DL beam prediction, in addition to FIGS. 18 and 19, a set where Set A and Set B are composed of the same set (Alt 3) may further be considered.

Temporal DL beam prediction predicts future beam information based on past beam measurement information, and it may be considered to predict the entire beam based on spatial DL beam prediction and then apply the same to the temporal DL beam prediction. For these reasons, FIGS. 18 and 19 of the spatial DL beam prediction may be used as a basic beam prediction scheme.

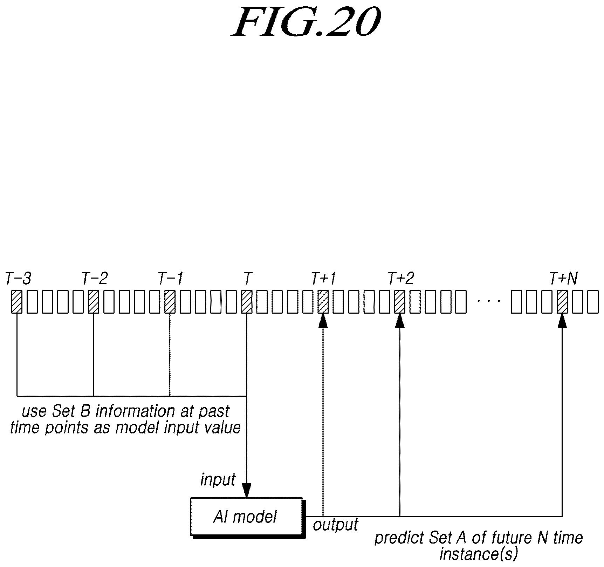

FIG. 20 is a view illustrating a temporal prediction operation using AI/ML according to an embodiment.

Referring to FIG. 20, the temporal beam prediction of BM-Case 2 is defined as an operation that predicts a beam result at a specific time in the near future based on past beam measurement result information as input. In this case, the beam used as input and the beam set derived as output may additionally consider Alt 3 where Set A and Set B are the same in addition to Alt 1 and Alt 2 of BM-Case1.

AI/ML based beam prediction may define different procedures defined according to the location of the AI/ML model and the subject of training/inference.
Alt.1. AI/ML model training and inference at NW side
Alt.2. AI/ML model training and inference at UE side
Alt.3. AI/ML model training at NW side, AI/ML model inference at UE side
Alt.4. AI/ML model training at UE side, AI/ML model inference at NW side

Among the alternatives, Alt. 1 and Alt. 2 do not require model transfer to the air interface because both training and inference operate at one node. However, information necessary to operate the AI/ML model may need to be signaled. This may correspond to the defined collaboration level y (transmission/reception of only signaling without model transfer). Alt. 3 and Alt. 4 require model transfer to the air interface since training and inference operate in different nodes. This may correspond to the defined collaboration level z. Currently, 3GPP has decided to support the Alt.1 and Alt.2, but has postponed the decision on Alt3 until the support for model transfer for the UE-side AI/ML model is determined. Further, it was decided not to support Alt 4 in rel-18.

Further, the beam management method using AI/ML currently under consideration is expected to reduce the burden of measuring the entire beam and reduce the overhead on RS through some of all the beams or a beam different from all the beams to predict the signal strength for the entire beam (Set A). However, if the predicted values for the beams for Set A predicted are not accurate, the method using AI/ML may select incorrect beams. Therefore, frequent beam failures or continuous disconnections may occur.

To address this, a process of continuously monitoring the accuracy of the predicted beams is necessary. Depending on the node that calculates the accuracy for monitoring and the node that determines the next procedure using the monitoring results, the following three monitoring cases may be considered.

Atl 1. UE-side Model monitoring
∘ UE monitors the performance metric(s)
∘ UE makes decision(s) of model selection/activation/ deactivation/switching/fallback operation

Atl 2. NW-side Model monitoring
∘ NW monitors the performance metric(s)
∘ NW makes decision(s) of model selection/activation/ deactivation/switching/ fallback operation

Alt 3. Hybrid model monitoring
∘ UE monitors the performance metric(s)
∘ NW makes decision(s) of model selection/activation/ deactivation/switching/ fallback operation

The above three alternatives for monitoring may consider UE-side, network-side (NW-side), and hybrid model monitoring in the case of a UE-side AI/ML model. However, in the case of an NW-side AI/ML model, only NW-side Model monitoring, as in the Alt. 2, is considered. In other words, for NW-side model monitoring, it was decided to study the spec impact for both UE-side and NW-side AI/ML models, and in this case, the base station needs to be reported the actual measured beam values from the UE to compare the inferred beam values with the actual measured beam values.

Further, even when UE-side model monitoring or hybrid model monitoring is performed with a UE-side model, the UE needs to additionally measure beams for monitoring as well as for inference. Therefore, the beams for this purpose need to be configured by the base station. In this case, the UE needs to recognize whether the related measurement is for model monitoring or inference. Depending on the case, the UE may omit the configuration process and perform beam measurement directly. In other words, if beams (Set B) used as input values for the model are randomly measured and results for Set A may be derived, the base station may not need to explicitly configure Set B and Set C. However, the disclosure may also apply to cases where it is necessary for the UE to distinguish a specific set of beams for inference and monitoring in the context of UE-side or or hybrid model monitoring.

However, if NW-side model monitoring is applied with the UE-side model, the UE needs to transmit both the result values for the beams derived through inference and the results of the beams measured for monitoring to the base station. The base station receiving this information needs to be able to recognize that the values reported are for different purposes.

Further, model monitoring is an operation that needs to be continuously performed, but it should not increase the beam measurement burden on the UE. For the beams used by the UE for monitoring, the following three approaches may be considered.
- Alt. 1. When the beam (Set C) for monitoring is the same as Set B
   **▪** It may not be applied when Set B and Set A are different.
- Alt. 2. When the beam (Set C) for monitoring is the same as Set A
- Alt. 3. When the beam (Set C) for monitoring is configured as a subset of Set A.
   **▪** Here, when Set B is a subset of Set A, Set B and Set C may partially overlap.
   **▪** When Set B and Set A are different, Set B and Set C are composed of different beams.

Considering the schemes, Monitoring Alt. 1 may be applicable only when Set A and Set B are identical or Set B is a subset of Set A for the NW-side model of BM-Case2. If it is the UE-side model, there is a high possibility that the network may not obtain the whole Set A inferred by the UE. In other words, in this case, since the UE is likely to report only the Top-K of the inferred Set A, the base station may obtain only the predicted Top-K. Therefore, even when the base station receives the reported result value for the actually measured Set B, it would be difficult to properly perform performance evaluation. For this reason, the monitoring Alt. 1 may be applicable only when Set A and Set B are identical or Set B is a subset of Set A for the NW-side model of BM-Case2. In this case, the network may receive the measurement result value report for Set B from the UE and use Set B not only for inference for a beam at a future time but also as data for monitoring the accuracy of the past inference result. This enables monitoring without requiring additional beam configuration.

In the case of Monitoring Alt. 2, the UE should measure beams belonging to Set A for monitoring. As described in Alt. 1, in the case of the UE-side model, the UE is highly likely to report only the Top-K of the inferred Set A beams to the base station. In this case, since the base station obtains only the result values for the Top-K, receiving all actual measurement values for Set A to perform model monitoring may unnecessarily increase signaling overhead. For this reason, it is preferable to apply monitoring Alt. 2 to the NW-side model. However, since Alt. 2 requires the UE to additionally measure Set A for monitoring as well as Set B for inference, the measurement burden significantly increases as the number of beams in Set A increases. Although setting different cycles for data collection for inference and monitoring may reduce the measurement burden for Set A, the burden for the UE to measure the entire Set A for monitoring still remains. On the other hand, since this calculates the accuracy between the inferred beams and the actually measured beams, it may be the most reliable method in terms of accuracy.

Monitoring Alt. 3 allows for the separate configuration of a subset (Set C) of Set A that is not identical to Set B as beams for monitoring. This subset may be arbitrarily selected by the base station or newly configured with a specific pattern/beam (e.g., Top-K). This may be applied even when Set B for inference is not identical to Set A, in which case Set B and Set C would be composed of completely different beams. If Alt. 3 is applied to the NW-side model, the configuration of Set C may be left to the implementation of the base station. In other words, since the base station derives Set A through inference, the network may arbitrarily configure Set C as beams for monitoring, and deliver it to the UE, and the UE performs measurement for the configured Set C and then reports the measurement values to the network. The network may perform monitoring based on the measurement values received from the UE. Further, in the case of the UE-side model, since the base station is likely to receive a report of only the beams of Top-K among the inferred beams of Set A from the UE, the base station may set some or all of the Top-K beams as beams for monitoring. In other words, even when it is the UE-side model, when NW-side monitoring is applied, monitoring may be performed by the UE measuring and reporting Set C according to the network's setting, similarly to the NW-side model. However, in Monitoring Alt. 3, it is necessary from the perspective of the base station to distinguish whether the reported beam results received by the UE are a report for Set B or Set C. This may be distinguished through the resources allocated for reporting by the network according to the channel through which the report is performed (i.e., PHY or MAC or RRC), but if it is not distinguished by resources or is received through a higher layer message (when transmitted through MAC or RRC), an explicit indicator to distinguish this should be included in the message.

In conclusion, when using monitoring Alt. 3 as a method to perform NW-side monitoring, a measure to set a new Set C composed of beams for monitoring, in addition to the setting for Set B composed of beams for inference, is required. This implies that the UE needs to additionally report the measurement result values for Set C (e.g., Set C or top-k) while reporting the measured Set B (for NW-side model) or predicted Top-K (for UE-side model) to the base station. In particular, from the network's perspective, it is necessary to receive reports on beams used for different purposes for the same model. Due to this, there is a possibility of reporting using duplicate indices according to the definition of the index for the beam or RS. In this case, it is necessary to clearly indicate which purpose each report serves so that the network may distinguish information reported as different results for the same beam (RS indicator). However, specific measures for this have not been discussed yet.

The following is information that should be transmitted to the NW after model inference for BM-Case 1 and 2 using the UE-side model.

For BM-Case1 with a UE-side AI/ML model, study the potential specification impact of L1 signaling to report the following information of AI/ML model inference to NW
- The beam(s) that is based on the output of AI/ML model inference
- FFS: Predicted L1-RSRP corresponding to the beam(s)
- FFS: other information

For BM-Case2 with a UE-side AI/ML model, study the potential specification impact of L1 signaling to report the following information of AI/ML model inference to NW
- The beam(s) of N future time instance(s) that is based on the output of AI/ML model inference
   ∘ FFS: value of N
- FFS: Predicted L1-RSRP corresponding to the beam(s)
- Information about the timestamp corresponding the reported beam(s)
   ∘ FFS: explicit or implicit
- FFS: other information

The disclosure proposes efficient beam measurement configuration and reporting methods for effective model monitoring when performing beam management using an AI/ML model, in consideration of the above-described content.

The detailed embodiments described below may be executed in any combination by the above-described UE and base station.

The present technology may be applied when performing a beam management procedure between a base station (NW) and a UE using an AI/ML model. For example, the present embodiment may include an indicator within the configuration and report message for a specific set of beams (i.e., RS resources corresponding to the beams), to indicate the process/purpose of the AI/ML model in which the corresponding beam set (for the resources in the case of a configuration message, for the beams reported in the case of a report message) is to be used (or was used). In other words, when the base station allocates/configures reference signal resources for beam measurement used in the AI/ML model to the UE, it may indicate the beam measurement purpose corresponding to any resource (set) information. Accordingly, the UE may use the measurement results for the process of the indicated AI/ML model. And/or, when reporting the measurement results of beams to be used in the AI/ML model, the indicator indicating the reported purpose may also be transmitted together in the report message. Accordingly, the base station may determine the use of the result values according to the purpose. Here, the proposed indicator may be set as one of the processes related to the AI/ML model, such as model inference, monitoring, or training. However, the disclosure is not limited thereto. Further, it may be included in the configuration message transmitted from the base station to the UE or the report message received by the base station.

For example, the present disclosure proposes a method in which an indicator indicating the AI/ML model process (e.g., training, inference, monitoring) in which the configured reference signal resources are to be used is transmitted together in a message configuring reference signal resource information for beam measurement to the UE performing beam management functions using the AI/ML model. The UE receiving reference signal resource information with the indicator may use the result values of the measured beams according to the indicated AI/ML model process. More specifically, this may be defined so that an indicator is configured either for a resource set or for each resource. In other words, the network may configure information about beams related to training, inference, and monitoring for the AI/ML. For example, it means that in a single reference signal resource set, beams for training (Set A), inference (Set B), and monitoring (Set C) may be configured individually according to purpose (method 1 for reference signal resource mapping for the model), or if the set of beams for model training, inference, and monitoring is configured to be mapped to each reference signal resource set, the purpose for each set per reference signal resource set (method 2 for reference signal resource mapping for the model) may be indicated.

Examples of associating CSI-RS resources with indicators are as follows.
1) CSI resource set #x - (Set A){
   CSI resource indicator #0 - Indicator indicating inference
   CSI resource indicator #1 - Indicator indicating monitoring,
   CSI resource indicator #2 - Indicator indicating inference,
   **...**
   CSI resource indicator #n-2 - Indicator indicating monitoring,
   CSI resource indicator #n-1 - Indicator indicating inference
   }
2) CSI resource set #0 - Indicator indicating training, (Set A)
   CSI resource set #1 - Indicator indicating inference, (Set B)
   CSI resource set #2 - Indicator indicating monitoring, (Set C)

The indicator indicating the purpose may be applied to any AI/ML model. The purpose may represent at least one of model training, inference, and monitoring. Depending on the number of pieces of purpose information, it may be defined as a 1-bit indicator (e.g., 0: inference, 1: monitoring or 0: training, 1: inference or 0: training, 1: monitoring) or a 2-bit length indicator (e.g., 00: training, 01: inference, 10: monitoring, 11: reserved). Alternatively, each piece of purpose information may be defined as a 1-bit length indicator and be represented as on/off, indicating the purpose corresponding to the beam (RS or RS set). Defining in this on/off manner is to support cases where a specific reference signal resource (beam) may be used simultaneously for different purposes.

Further, the embodiments may include an indicator related to the purpose/result of the measurement when reporting the measurement results of the beam as well as the beam configuration of the UE. In other words, when the UE-side model receives reference signal resource (set) information indicated as "model inference" by the indicator, the UE recognizes this as Set B and uses the measurement values for the corresponding beam (RS) as model input values. When reporting the Top-K of Set A inferred by the model to the base station, the indicator (identification information) indicating that the report is predicted beam information ("model inference") derived using Set B may be included. Further, even when the set of beams for inference is not explicitly indicated by the network in the configuration message and is selected and used by the UE, the purpose of reporting the beam measurement results of the UE may be included in the report message transmitted by the UE to the base station. Particularly when NW-side monitoring is applied in the UE-side mode, the UE needs to transmit each of the beam results inferred by the model without the indication of the base station and the beam measurement results for monitoring in the network. This implies that the UE should include the inference results and the beam measurement results for monitoring, along with each indicator according to its purpose, in the report message and transmit the same to the network.

The reason for including the indicator representing the reporting purpose in the report message is that when the network receives result values for some beams (Set B or top-k or Set C) of the same beam set (Set A), it is necessary to distinguish whether each report for the same beam index is a beam result report (inference) by inference or a beam result report (training or monitoring) by actual measurement. Particularly, when NW-side monitoring is applied in the UE-side model, the UE may need to transmit the result values measured for monitoring to the base station while transmitting the inference results derived through the model to the network. In this case, the base station needs to distinguish whether the result value for the received beam is a report transmitted through inference or a result transmitted for the base station's monitoring. For this purpose, the indicator indicating whether the reported value for each beam is predicted or measured may be used, but it would be advantageous in terms of overhead and processing to map only one indicator that indicates whether the set of reported beams is a result of inference or a result transmitted for monitoring, rather than using a measured/predicted indicator for each beam.

Reports for each purpose may be transmitted together in one message or separately in different messages. More specifically, in the case of BM-Case 1, it may be defined that beam measurement for monitoring is conducted simultaneously with beam measurement for inference and that the result values for inference and monitoring are transmitted through one message, or it may be defined that additional beam measurement for monitoring is performed through an additional (sequential) configuration of the network immediately after receiving the result report for inference. BM-Case 2 may be performed simultaneously or sequentially as in the above-described methods, but infers the beam results at future times. Thus, simultaneously performing beam measurement for monitoring and beam measurement for inference would be a much more efficient method.

The disclosure intends to describe embodiments divided largely into the following two cases. Further, in each case, it is described considering alternatives for the relationship between Set A and Set B of BM-Case 1 and BM-Case 2.
1. UE-side model, UE-side monitoring
2. UE-side model, NW-side monitoring
   a) BM-case 1 (Spatial beam prediction)
      i. Alt. 1: when Set B is a subset of Set A
      ii. Alt. 2: when Set B differs from Set A
   b) BM-case 2 (Temporal beam prediction)
      i. Alt. 1: when Set B is a subset of Set A
      ii. Alt. 2: when Set B differs from Set A
      iii. Alt. 3: when Set B is identical to Set A

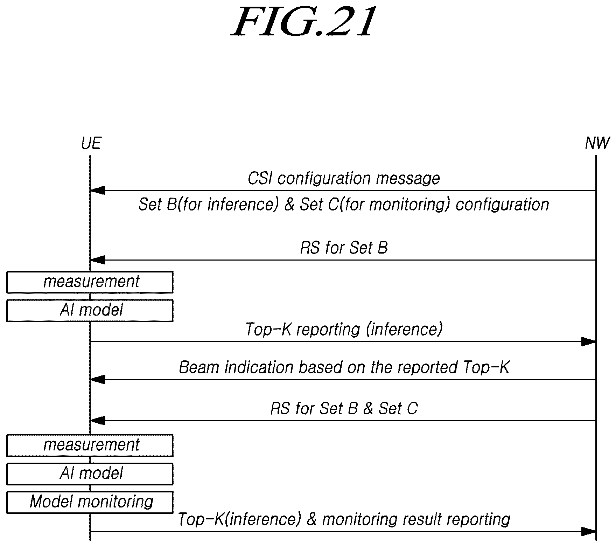

FIG. 21 is a view illustrating the operation in the case of BM-Case 1 in the UE-side model, with UE-side monitoring according to an embodiment.

First, an embodiment for the case of the UE-side model, UE-side monitoring is described. In this case, both inference and monitoring are performed by the UE. However, the UE needs to measure the beams for input of the AI/ML model and monitoring, and this will utilize the reference signal resources configured by the base station. The UE, which has been configured with the beams to be used in the AI/ML model by the base station, may need to distinguish whether each beam is configured for inference or for monitoring. For this purpose, the indicator proposed in this technology may be used as follows.

### (Operations of the UE)

1. The UE receives an RRC message including configuration information for reference signal resources for beam management using AI/ML from the base station.
   - The RRC message includes at least one of the following information.
      1) Configuration information for the first reference signal resource and configuration information for reporting along with the indicator indicating model inference.
      2) Configuration information for the second reference signal resource and configuration information for reporting along with the indicator indicating model monitoring.
         Here, the first reference signal resource information and the second reference signal resource information may belong to the same resource set or may be defined as different resource sets.
2. The UE measures the strength/quality of the beam transmitted in the first reference signal resource corresponding to the indicator indicating model inference. The measurement result is used as an input value for the AI/ML model. All or some (Top-K) of the output values derived through the model are reported to the base station based on the base station's reporting configuration.
   - The report message may include at least one of the following information.
      1) Indicator indicating model inference (or predicted)
      2) Model output value

      Beam index (or RS indicator) and/or RSRP (or RSRQ)
      Result values for all derived beams
      Result values for some beams: In this case, only the K beam result values inferred to have the highest RSRP may be selectively reported.
3. The UE measures the strength/quality of the beam transmitted in the second reference signal resource corresponding to the purpose indicator that indicates model monitoring. All or some of the measurement results are used to calculate the monitoring metric.
   - The monitoring results may be transmitted to the base station.

### (Operations of the base station)

1. The base station transmits an RRC message including configuration information regarding reference signal resources for beam management using AI/ML to the UE.
   - The RRC message includes at least one of the following information.
      1) Configuration information for the first reference signal resource and configuration information for reporting along with the indicator indicating model inference
      2) Configuration information for the second reference signal resource and configuration information for reporting along with the indicator indicating model monitoring
         Here, the first reference signal resource and the second reference signal resource information may belong to the same resource set or may be defined as different resource sets.
2. The base station transmits the first reference signal and the second reference signal based on the configuration transmitted to the UE.
3. The base station receives the result report from the UE.
   - Upon receiving a report message including the indicator indicating model inference, the base station may use the same to indicate the serving beam of the UE.
   - Upon receiving model monitoring results, the base station may perform model LCM-related operations such as corresponding model activation/deactivation/switching.

Next, embodiments for the case of UE-side model, NW-side monitoring are described. In this case, inference is performed by the UE, but monitoring is performed by the NW. The UE needs to measure the beam for AI/ML model input and the beam for monitoring, which will use the reference signal resources configured from the base station as in UE-side model, UE-side monitoring. The UE that has been configured with the beams to be used for the AI/ML model by the base station needs to distinguish whether each beam is configured for inference or for monitoring. For this purpose, the indicator proposed in this technology may be used as follows. Further, NW-side monitoring, unlike UE-side monitoring, requires the UE to transmit the measurement results of the beams for monitoring to the base station. This means that both the predicted beam result values derived through inference and the beam result values measured for monitoring in the NW are reported, and the indicator proposed in this technology may be used as follows to distinguish them.

Embodiments of UE-side model, NW-side monitoring are described for each of BM-Case1 and BM-Case2. First, the operations of the UE and the base station in an embodiment in which the technology of the embodiments is applied to BM-Case1 are described. This may be applied to both alternatives 1 and 2, distinguished by the relationship between Set A and Set B, and for BM-Case 1, only the case where the set of beams for monitoring is defined as Set A or Set C(or top-K), a subset of the new Set A, is considered.

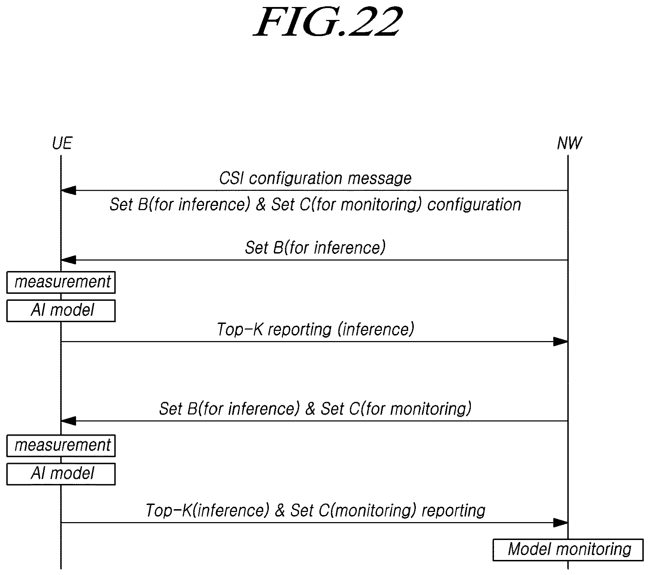

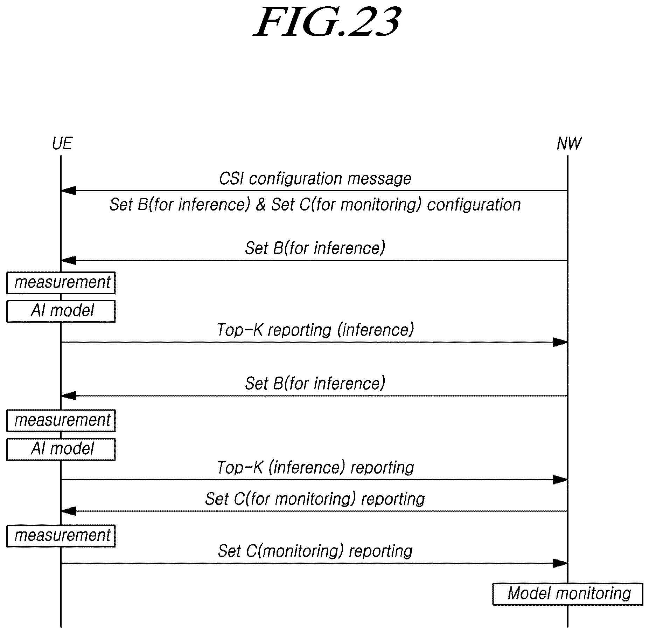

FIG. 22 is a view illustrating an example of the operation when it is BM-Case1 in UE-side model, NW-side monitoring according to an embodiment. FIG. 23 is a view illustrating another example of the operation when it is BM-Case1 in UE-side model, NW-side monitoring according to an embodiment.

### (Operations of the UE)

1. The UE receives an RRC message including configuration information for reference signal resources for beam management using AI/ML from the base station.
   - The RRC message includes at least one of the following information.
      1) Configuration information for the first reference signal resource and configuration information for reporting along with the indicator indicating model inference
      2) Configuration information for the second reference signal resource and configuration information for reporting along with the indicator indicating model monitoring
         Here, the first reference signal resource information and the second reference signal resource information may belong to the same resource set or may be defined as different resource sets.
2. The UE measures the strength/quality of the beam transmitted in the first reference signal resource corresponding to the indicator indicating model inference. The measured result value is used as an input value for the AI/ML model. All or some (Top-K) of the output values derived through the model are reported to the base station based on the base station's reporting configuration.
   - The report message may include at least one of the following information.
      1) Indicator indicating model inference
      2) Model output value
         Beam index (or RS indicator) and/or RSRP (or RSRQ)
         Result values for all derived beams are reported
         Result values for some beams are reported: In this case, only the K beam result values inferred to have the highest RSRP may be selectively reported.
3. The UE measures the strength/quality of the beam transmitted in the second reference signal resource corresponding to the indicator that indicates model monitoring. All or some of the measured result values are reported to the base station based on the report configuration of the base station.
   - The report message may include at least one of the following information.
      1) Indicator indicating model monitoring
      2) Measurement result value
         Beam index (or RS indicator) and/or RSRP (or RSRQ)
         Result values for all measured beams are reported
         Result values for some beams are reported: Only results for some of the beams measured by random selection of the UE or an indication of the base station may be reported

The operations 2 and 3 described above may be performed simultaneously or sequentially. For example, the operations may be performed simultaneously as illustrated in FIG. 22. Alternatively, the operations may be performed sequentially as illustrated in FIG. 23. The operations may be sequentially performed when the beam set (RS resources) for monitoring is configured based on the reported inference result value.

### (Operations of the base station)

1. The base station transmits an RRC message including configuration information regarding reference signal resources for beam management using AI/ML to the UE.
   - The RRC message includes at least one of the following information.
      1) Configuration information for the first reference signal resource and configuration information for reporting along with the indicator indicating model inference
      2) Configuration information for the second reference signal resource and configuration information for reporting along with the indicator indicating model monitoring
         Here, the first reference signal resource and the second reference signal resource information may belong to the same resource set or may be defined as different resource sets.
2. The base station transmits the first reference signal and the second reference signal based on the configuration transmitted to the UE.
3. The base station receives the result report from the UE.

Upon receiving a report message including the indicator indicating model inference, the base station may use the same to indicate the serving beam of the UE.

Upon receiving a report message including the indicator indicating model monitoring, the base station may perform model management through comparison between the result values for the beams in the message reported including the indicator indicating inference and the beams in the message reported including the indicator indicating monitoring.

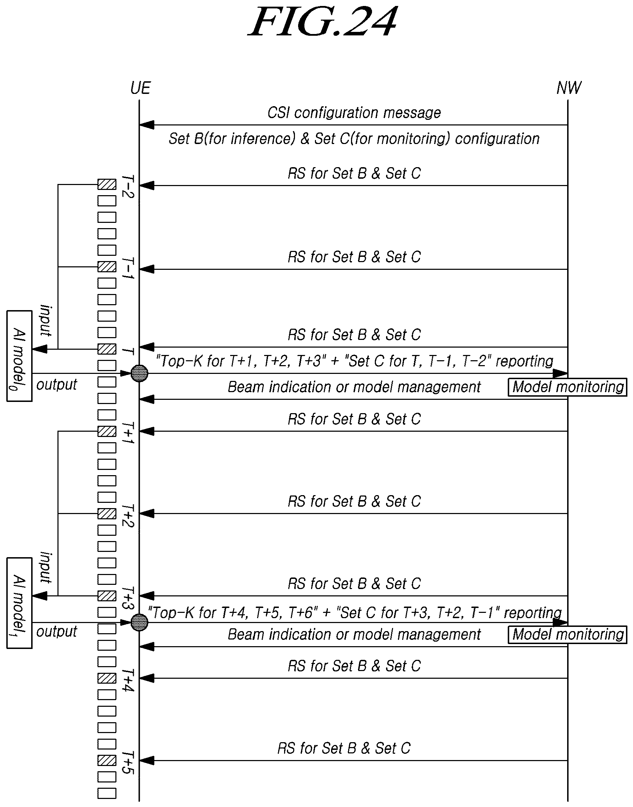

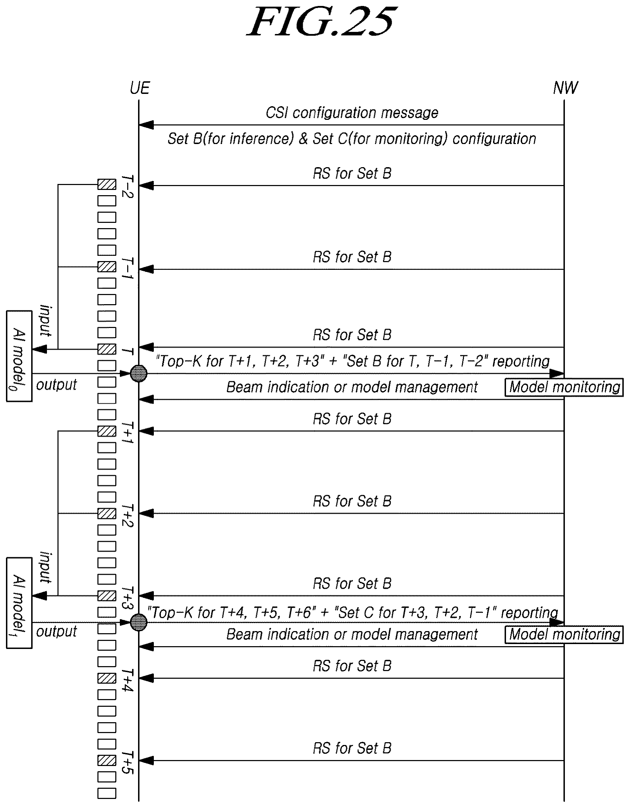

FIG. 24 is a view illustrating the operation of the UE-side model in BM-Case2 according to an embodiment. FIG. 25 is a view illustrating the operation of the UE-side model in BM-Case2 according to another embodiment.

Next, the operations of the UE and the base station in an embodiment in which the technology of the disclosure is applied to BM-Case2 in UE-side model with NW-side monitoring. This may be applied to all of the alternatives 1, 2, and 3 distinguished by the relationship between Set A and Set B, but the description is broken down into Alt. 2 (where Set A and Set B constitute different sets), and Alt. 1 and Alt. 3. In Alt. 2 of BM-Case 2, Set A and Set B are composed of different beams and, thus, it is preferable to newly configure Set C. In this case, the beam set for monitoring, Set C, is assumed to be defined as Set A or a subset (e.g., Top-K) of a new Set A. However, in alt. 1 where Set B is a subset of Set A or alt. 3 where set B is identical to Set A, a method (FIG. 25) in which Set C is configured as the same set as Set B may be considered in addition to the method (FIG. 24) in which Set C is configured as Set A or a subset of Set A.

BM-case 2 infers beam information at a future time, so model accuracy may be monitored by actually measuring the information reported at the predicted time. In other words, the UE may report ① the predicted beam information at a future time, derived through model inference, and ② the beam information actually measured up to the current time, together with ① the inference results and ② the monitoring purpose. In the embodiments, an indicator for distinguishing, from the network perspective, the beam result values reported for different purposes for the same beam index is included in the message.

### (Operations of the UE)

1. The UE receives an RRC message including configuration information for reference signal resources for beam management using AI/ML from the base station.
   - The RRC message includes at least one of the following information.
      1) Configuration information for the first reference signal resource and configuration information for reporting along with the indicator indicating model inference
      2) Configuration information for the second reference signal resource and configuration information for reporting along with the indicator indicating model monitoring
         Here, the first reference signal resource and the second reference signal resource may belong to the same resource set or may be defined as different resource sets.
2. The UE measures the strength/quality of the beam transmitted in the first reference signal resource corresponding to the indicator indicating model inference. The measured result value is used as an input value for the AI/ML model. All or some (Top-K) of the output values derived through the model are reported to the base station based on the base station's reporting configuration.
   - At least the following information is included in the report message by the number of past times.
      1) Indicator indicating model inference or time instance information meaning that the information is future time information
         * The corresponding indicator may be indicated through an explicit or implicit indicator.
         * Here, the implicit indicator means that, when the number of time instances is determined, they are sequentially mapped according to determined times by the number of time instances although there is no explicit indicator, implicitly indicating that the value corresponding to a future time is prediction information transmitted by inference.
      2) Model output value for each time
         Beam index (or RS indicator) and/or RSRP (or RSRQ)
         Result values for all derived beams are reported
         Result values for some beams are reported: In this case, only the K beam result values inferred to have the highest RSRP may be selectively reported.
3. The UE measures the strength/quality of the beam transmitted in the second reference signal resource corresponding to the indicator that indicates model monitoring. All or some of the measured result values are reported to the base station based on the report configuration of the base station.
   - At least the following information is included in the report message by the number of past times.
      1) Indicator indicating model monitoring or time instance information indicating (explicitly or implicitly) that the information is past time information
         * The corresponding indicator may be indicated through an explicit or implicit indicator.
         * Here, the implicit indicator means that, when the number of time instances is determined, they are sequentially mapped according to determined times by the number of time instances although there is no explicit indicator, implicitly indicating that the value corresponding to a past time is a report for monitoring.
      2) Measurement result value for each time
         Beam index (or RS indicator) and/or RSRP (or RSRQ)
         Result values for all measured beams are reported
         Result values for some beams are reported: Only results for some of the beams measured by random selection of the UE or an indication of the base station may be reported
         and 2) above may be simultaneously or sequentially. However, in BM-case2, beams at future times are inferred, so that it is more efficient to simultaneously perform inference and monitoring.

### (Operations of the base station)

1. The base station transmits an RRC message including configuration information regarding reference signal resources for beam management using AI/ML to the UE.
   - The RRC message includes at least one of the following information.
      1) Configuration information for the first reference signal resource and configuration information for reporting along with the indicator indicating model inference
      2) Configuration information for the second reference signal resource and configuration information for reporting along with the indicator indicating model monitoring
         Here, the first reference signal resource and the second reference signal resource may belong to the same resource set or may be defined as different resource sets.
2. The base station transmits the first reference signal and the second reference signal based on the configuration transmitted to the UE.
3. The base station receives the result report from the UE.
   - Upon receiving a report message including the indicator indicating model inference, the base station may use the same to indicate the serving beam of the UE.
   - Upon receiving a report message including the indicator for model monitoring, the base station may perform model management through comparison between the result values for the beams in the message reported including the indicator inference and the beams in the message reported including the indicator for monitoring.

The model input/output time for the above-described temporal beam prediction may be performed once or multiple times (e.g., n times) depending on the implementation method of the model, and the present technology may be applied to various methods for predicting beams at future times.

Lastly, in the case of NW-side model, NW-side monitoring, inference and monitoring are both performed by the network. Accordingly, the base station needs to configure reference signal resources for collecting beam information from the UE and configure a method for reporting the same. However, as the UE measures the reference signal according to the settings of the base station, and reporting thereof may be performed by the conventional method, an indicator for distinguishing between inference and monitoring is unnecessary. The base station may properly use the result values in each model process through reception of the result values for beams configured thereby.

As described above, according to the present embodiment, when a beam management scheme using AI/ML is performed, the UE or the network may correctly use beam information according to the purpose of the AI/ML model. Accordingly, it is possible to prevent errors in the beam management scheme using the AI/ML model.

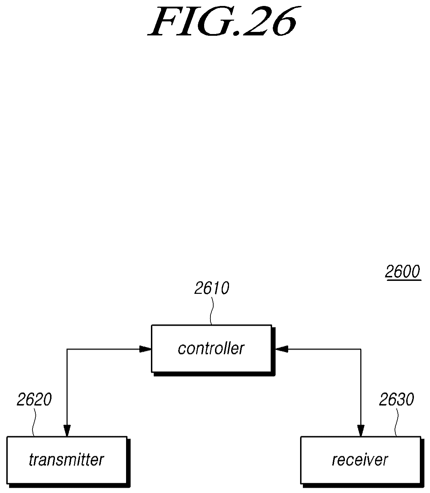

FIG. 26 is a block diagram illustrating a UE according to an embodiment.

Referring to FIG. 26, a UE 2600 performing a beam management operation may comprise a receiver 2630 receiving, from a base station, a message including at least one piece of resource information for a reference signal and an indicator indicating a model process associated with the at least one piece of resource information, a controller 2610 performing a measurement operation for the reference signal based on the message to derive a measurement result, and performing the model process associated with the indicator using the measurement result, and a transmitter 2620 transmitting, to the base station, a report message including at least one of the measurement result and the model process result information.

For example, the model process may be configured to be distinguished according to the purpose of use of a reference signal, transferred through each of the at least one piece of resource information, in an artificial intelligence or machine learning model configured to perform beam prediction. As an example, the model process may be distinguished as any one of input, output, or model monitoring for the artificial intelligence or machine learning model. As another example, the model process may be configured to be distinguished as any one of training, inference, and monitoring. In yet another example, the model process may be configured to be variously distinguished according to two or more preset purposes.

If the model process is set as input, the measurement result for the reference signal transferred through the corresponding resource information may be used as an input value to the artificial intelligence or machine learning model. If the model process is set as output, the measurement result for the reference signal transferred through the corresponding resource information may be predicted as an output value of the artificial intelligence or machine learning model. Alternatively, if the model process is set as monitoring, an operation of monitoring model performance by comparing the measurement result for the reference signal transferred through the corresponding resource information with the output value of the artificial intelligence or machine learning model may be indicated.

For example, the reference signal may be a signal such as CSI-RS, SSB, or the like, transmitted from the base station to the UE. Further, the message may be transferred through higher layer signaling. For example, the message may be an RRC message, and the resource information for the reference signal and the indicator may be mapped and set in association with each other.

For example, the indicator may be configured to be associated with each of resource information or with each resource information set. In an example, the indicator may be associated with each piece of resource information through which the reference signal may be transmitted, indicating the purpose of the reference signal transmitted through the corresponding resource information. In another example, the indicator may be configured to be associated with each of two or more resource information sets, indicating the purpose of the reference signal transmitted through the resource information included in the corresponding resource information set. In yet another example, the indicator may be configured to be associated with the resource information set, and the corresponding resource information set may be used for different reference signals. In other words, the resource information for the first reference signal and the resource information for the second reference signal may be set as the same resource information set, and the indicator may be configured to be associated with the corresponding resource information set. As described above, each indicator may be indicated in the form of an index and may be set as a 1-bit or 2-bit value as needed.

Further, the message may include configuration information for a report message to be used when the UE reports the measurement result or model process result to the base station. For example, the configuration information for the report message may include transmission period, transmission resources, and identification information included in the report message.

For example, the receiver 2630 receives the reference signal from the resource information included in the message. If the reference signal is received, the controller 2610 may measure the quality or strength of the reference signal. For example, the controller 2610 may measure RSRP, RSRQ, or similar metrics, for the reference signal received through the corresponding resource information to derive the measurement result.

Further, the controller 2610 may execute the model process associated with resource information of the reference signal based on the indicator included in the message. For example, the controller 2610 may input the measurement result as an input to the artificial intelligence or machine learning model to perform a training process. Alternatively, when the indicator indicates inference, the controller 2610 may infer a measurement result for the resource information as an output from the artificial intelligence or machine learning model. Alternatively, when the indicator indicates model monitoring, the controller 2610 may perform an operation of monitoring the performance of the model by comparing the measurement result for the reference signal through the resource information with the result predicted through the model.

For example, the report message may be transmitted to the base station periodically or aperiodically. The report message may include measurement result information for the reference signal. Further, the report message may further include model process result information derived by performing the model process. When the report message is transmitted, the base station should distinguish whether each result included in the measurement result or model process result information is an actual measurement result of the UE or a result predicted through the model. For example, the model process result information may include at least one of a predicted measurement result predicted through the model process and a model monitoring result based on a comparison between the measurement result and the predicted measurement result.

To this end, the report message may further include identification information corresponding to each of the measurement result and the model process result information. For example, the identification information may be configured to be associated in the form of an index so that it may be distinguished whether the result value for the individual model process execution result included in each measurement result or model process result information is based on inference or actual measurement. Alternatively, the identification information may be configured to distinguish between the result based on actual measurement, the result based on model output, and the model monitoring result. Therefore, the identification information may be set as one bit or two bits. In addition, the identification information may be mapped and set for each piece of information included in the report message.

Further, the controller 2610 controls the overall operation of the UE 2600 required to perform the beam management operation according to the present embodiment.

The transmitter 2620 and the receiver 2630 are used to transmit or receive signals, messages, data necessary for performing the above-described embodiments, to and from the base station.

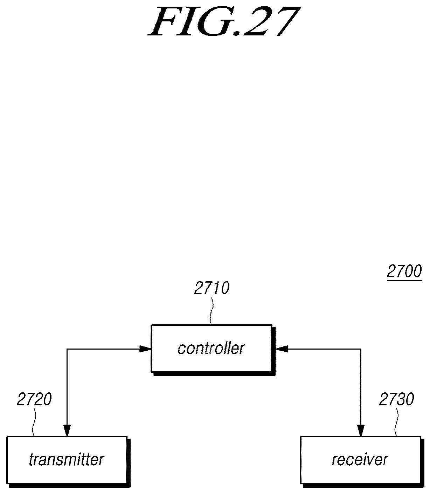

FIG. 27 is a block diagram illustrating a base station according to an embodiment.

Referring to FIG. 27, a base station 2700 performing a beam management operation may comprise a transmitter 2720 transmitting, to a UE, a message including at least one piece of resource information for a reference signal and an indicator indicating a model process associated with the at least one piece of resource information, and a receiver 2730 receiving, from the UE, a report message including at least one of a measurement result obtained by the UE performing a measurement operation for the reference signal based on the message, and model process result information derived from the model process.

For example, the model process may be configured to be distinguished according to the purpose of use of a reference signal, transferred through each of the at least one piece of resource information, in an artificial intelligence or machine learning model configured to perform beam prediction. As an example, the model process may be distinguished as any one of input, output, or monitoring for the artificial intelligence or machine learning model. As another example, the model process may be configured to be distinguished as any one of training, inference, and monitoring. In yet another example, the model process may be configured to be flexibly distinguished according to two or more preset purposes.

If the model process is set as an input, the measurement result for the reference signal transferred through the corresponding resource information may be used as an input to the artificial intelligence or machine learning model. If the model process is set as an output, the measurement result for the reference signal transferred through the corresponding resource information may be predicted as an output from the artificial intelligence or machine learning model. Alternatively, if the model process is set as monitoring, the model performance may be monitored by comparing the measurement result for the reference signal transferred through the corresponding resource information with the output value of the artificial intelligence or machine learning model may be indicated.

For example, the reference signal may be a signal such as CSI-RS, SSB, or the like, transmitted from the base station to the UE. Further, the message may be transferred through higher layer signaling. For example, the message may be an RRC message, and the resource information for the reference signal and the indicator may be mapped and set in the message.

For example, the indicator may be configured to be associated with each piece of resource information or with each resource information set. In an example, the indicator may be associated with each piece of resource information through which the reference signal may be transmitted, indicating the purpose of the reference signal transmitted through the corresponding resource information. In another example, the indicator may be configured to be associated with each of two or more resource information sets, indicating the purpose of the reference signal transmitted through the resource information included in the corresponding resource information set. In yet another example, the indicator may be configured to be associated with a resource information set, and the corresponding resource information set may be used for different reference signals. In other words, the resource information for the first reference signal and the resource information for the second reference signal may be set as the same resource information set, and the indicator may be configured to be associated with the corresponding resource information set. As described above, each indicator may be indicated in the form of an index and may be set as a 1-bit or 2-bit value as needed.

Further, the message may include configuration information for a report message to be used when the UE reports the measurement result or model process result information to the base station. For example, the configuration information for the report message may include transmission period, transmission resources, and identification information for the information included in the report message.

The UE may perform a measurement operation for the reference signal based on the message to derive a measurement result and perform the model process associated with the indicator using the measurement result. Thereafter, the UE may transmit the measurement result and the model process result information to the base station through the report message.

For example, the UE receives the reference signal from the resource information included in the message. If the reference signal is received, the UE may measure the quality or strength of the reference signal. For example, the UE may measure RSRP, RSRQ, or similar metrics, for the reference signal received through the corresponding resource information to derive the measurement result. Further, the UE may execute the model process associated with resource information of the reference signal based on the indicator included in the message. For example, the UE may input the measurement result as an input to the artificial intelligence or machine learning model to perform a training process. Alternatively, when the indicator indicates inference, the UE may infer a measurement result for the resource information as an output from the artificial intelligence or machine learning model. Alternatively, when the indicator indicates model monitoring, the UE may monitor the model performance by comparing the measurement result for the reference signal through the resource information and the result predicted through the model.

Meanwhile, the report message may be transmitted to the base station 2700 periodically or aperiodically. The report message may include measurement result information for the reference signal. Further, the report message may include model process result information derived by performing the model process. If the report message is received, the controller 2710 should distinguish whether each result included in the measurement result or model process result information is an actual measurement result of the UE or a result predicted through the model. For example, the model process result information may include at least one of a predicted measurement result predicted through the model process and a model monitoring result based on a comparison between the measurement result and the predicted measurement result.

To this end, the report message may include identification information corresponding to each of the measurement result and the model process result information. For example, the identification information may be configured to be associated in the form of an index so that it may be distinguished whether the result included in the measurement result or model process result information is based on inference or actual measurement. Alternatively, the identification information may be configured to distinguish between the result based on actual measurement, the result based on model output, and the model monitoring result.

Therefore, the identification information may be set as one bit or two bits. In addition, the identification information may be mapped and set for each piece of information included in the report message.

Further, the controller 2710 controls the overall operation of the base station 2700 required to perform the beam management operation according to the present embodiment.

The transmitter 2720 and the receiver 2730 are used to transmit or receive signals, messages, or data necessary for performing the above-described embodiments, to and from the UE.

The embodiments described above may be supported by the standard documents disclosed in at least one of the radio access systems such as IEEE 802, 3GPP, and 3GPP2. That is, the steps, configurations, and parts, which have not been described in the present embodiments, may be supported by the above-mentioned standard documents for clarifying the technical concept of the disclosure. In addition, all terms disclosed herein may be described by the standard documents set forth above.

The above-described embodiments may be implemented by any of various means. For example, the present embodiments may be implemented as hardware, firmware, software, or a combination thereof.

In the case of implementation by hardware, the method according to the present embodiments may be implemented as at least one of an application specific integrated circuit (ASIC), a digital signal processor (DSP), a digital signal processing device (DSPD), a programmable logic device (PLD), a field programmable gate array (FPGA), a processor, a controller, a microcontroller, or a microprocessor.

In the case of implementation by firmware or software, the method according to the present embodiments may be implemented in the form of an apparatus, a procedure, or a function for performing the functions or operations described above. Software code may be stored in a memory unit, and may be driven by the processor. The memory unit may be provided inside or outside the processor, and may exchange data with the processor by any of various well-known means.

In addition, the terms "system", "processor", "controller", "component", "module", "interface", "model", "unit", and the like may generally mean computer-related entity hardware, a combination of hardware and software, software, or running software. For example, the above-described components may be, but are not limited to, a process driven by a processor, a processor, a controller, a control processor, an entity, an execution thread, a program and/or a computer. For example, both the application that is running in a controller or a processor and the controller or the processor may be components. One or more components may be provided in a process and/or an execution thread, and the components may be provided in a single device (e.g., a system, a computing device, etc.), or may be distributed over two or more devices.

The above embodiments of the present disclosure have been described only for illustrative purposes, and those skilled in the art will appreciate that various modifications and changes may be made thereto without departing from the scope and spirit of the disclosure. Further, the embodiments of the disclosure are not intended to limit, but are intended to illustrate the technical idea of the disclosure, and therefore the scope of the technical idea of the disclosure is not limited by these embodiments. The scope of the present disclosure shall be construed on the basis of the accompanying claims in such a manner that all of the technical ideas included within the scope equivalent to the claims belong to the present disclosure.

### CROSS-REFERENCE TO RELATED APPLICATION

This application claims priority under 35 U.S.C. § 119(a) to Korean Patent Application No. 10-2023-0003748, filed on January 10, 2023, and Korean Patent Application No. 10-2023-0196792, filed on December 29, 2023, the entire contents of which are incorporated herein by reference. This application also claims priority to the above applications for countries other than the United States for the same reasons, and the entire contents thereof are incorporated herein by reference.

## Claims

1. A method for a user equipment (UE) to perform a beam management operation, the method comprising:
receiving, from a base station, a message including i) at least one piece of resource information for a reference signal and ii) an indicator indicating a model process associated with the at least one piece of resource information;
performing a measurement operation for the reference signal based on the message to derive a measurement result, and performing the model process associated with the indicator using the measurement result; and
transmitting, to the base station, a report message including at least one of the measurement result and model process result.

2. The method of claim 1, wherein the model process is configured to be distinguished according to a purpose of use of a reference signal, transferred through each of the at least one piece of resource information, in an artificial intelligence or machine learning model configured to perform beam prediction.

3. The method of claim 2, wherein the model process is distinguished as any one of input, output, or monitoring for the artificial intelligence or machine learning model.

4. The method of claim 1, wherein the indicator is configured to be associated with each piece of resource information or with each resource information set.

5. The method of claim 1, wherein the report message further includes identification information corresponding to each of the measurement result and the model process result.

6. The method of claim 5, wherein the model process result includes at least one of a predicted measurement result predicted through the model process and a model monitoring result based on a comparison between the measurement result with the predicted measurement result.

7. A method for a base station to perform a beam management operation, the method comprising:
transmitting, to a user equipment (UE), a message including i) at least one piece of resource information for a reference signal and ii) an indicator indicating a model process associated with the at least one piece of resource information; and
receiving, from the UE, a report message including at least one of a measurement result obtained by the UE as a result of performing a measurement operation for the reference signal based on the message, and model process result derived from the model process.

8. The method of claim 7, wherein the model process is configured to be distinguished according to a purpose of use of a reference signal, transferred through each of the at least one piece of resource information, in an artificial intelligence or machine learning model configured to perform beam prediction.

9. The method of claim 7, wherein the indicator is configured to be associated with each piece of resource information or with each resource information set.

10. The method of claim 7, wherein the report message further includes identification information corresponding to each of the measurement result and the model process result.

11. A user equipment (UE) performing a beam management operation, comprising:
a receiver receiving, from a base station, a message including i) at least one piece of resource information for a reference signal and ii) an indicator indicating a model process associated with the at least one piece of resource information;
a controller performing a measurement operation for the reference signal based on the message to derive a measurement result, and performing the model process associated with the indicator using the measurement result; and
a transmitter transmitting, to the base station, a report message including at least one of the measurement result and model process result.

12. The UE of claim 11, wherein the model process is configured to be distinguished according to a purpose of use of a reference signal, transferred through each of the at least one piece of resource information, in an artificial intelligence or machine learning model configured to perform beam prediction.

13. The UE of claim 12, wherein the model process is distinguished as any one of input, output, or monitoring for the artificial intelligence or machine learning model.

14. The UE of claim 11, wherein the indicator is configured to be associated with each piece of resource information or with each resource information set.

15. The UE of claim 11, wherein the report message further includes identification information corresponding to each of the measurement result and the model process result.

16. The UE of claim 15, wherein the model process result includes at least one of a predicted measurement result predicted through the model process and a model monitoring result obtained by comparing the measurement result with the predicted measurement result.
